# EUROPEAN PATENT APPLICATION

(11) **EP 4 768 792 A1**
(43) Date of publication of application: **01.07.2026**
(21) Application number: 25846082.3
(22) Date of filing: 09.06.2025
(51) Int. Cl.: F24F 1/0011, F24F 13/14

(54) **AIR GUIDE ASSEMBLY AND AIR TREATMENT APPARATUS**

(30) Priority: 28.10.2024 CN 202411514814
(71) Applicant: Dreame Innovation Technology (Suzhou) Co., Ltd., Suzhou, Jiangsu 215000 (CN)
(72) Inventor: LI, Zhengliang, Suzhou, Jiangsu 215000 (CN); WANG, Pengjie, Suzhou, Jiangsu 215000 (CN); WANG, Wei, Suzhou, Jiangsu 215000 (CN)
(74) Representative: Gill Jennings & Every LLP
(86) International application number: PCT/CN2025/100018
(87) International publication number: WO 2026/091535

(57) **Abstract**

The present application provides an air guiding structure and an air handling device, which relates to the technical field of air handling devices. The air guiding structure is mounted at an air outlet of an air handling device and includes: an adjusting assembly, including a carrier and air guiding vanes movably connected to the carrier, where the carrier extends along a length direction of the air outlet, and the air guiding vanes are sequentially provided along a plate surface of the carrier; and a driving assembly, which drives the carrier to change its position relative to the air outlet, and which drives each air guiding vane to change its position relative to the carrier. The air guiding structure provided by the present application can flexibly adjust an air supply angle of the air handling device and expand an air supply coverage area of the air handling device. Moreover, a driving mode of the air guiding structure is simpler, which is conducive to saving space and reducing energy consumption.

## Description

The present application claims priority to Chinese patent application No. 202411514814.7, filed with the China National Intellectual Property Administration on October 28, 2024 and entitled "AIR GUIDING ASSEMBLY AND AIR HANDLING DEVICE". The aforementioned application is hereby incorporated by reference in its entirety.

### TECHNICAL FIELD

The present application relates to the technical field of air handling devices and, in particular, to an air guiding assembly and an air handling device.

### BACKGROUND

An air handling device, such as air conditioning device, generally includes an air outlet and an air deflector provided on an outer side of the air outlet. An end of the air deflector is rotatably connected to a bottom of the air outlet, and an air supply direction of the air outlet is changed by adjusting an opening angle of the air deflector relative to the air outlet. However, the above-mentioned way of adjusting the air supply direction results in a small air blowing coverage area of the air conditioning device.

### SUMMARY

The present invention provides an air guiding structure, an indoor unit and an air handling device. The air guiding structure can flexibly adjust an air supply angle of the air handling device and expand an air supply coverage area of the air handling device. Moreover, a driving mode of the air guiding structure is simpler, which is conducive to saving space and reducing energy consumption.

In an aspect, the present invention provides an air guiding structure mounted at an air outlet of an air handling device, where the air guiding structure includes: an adjusting assembly, where the adjusting assembly includes a carrier and a plurality of air guiding vanes movably connected to the carrier; the carrier extends along a length direction of the air outlet, and each air guiding vane is sequentially provided along a plate surface of the carrier; a driving assembly, where the driving assembly drives the carrier to change its position relative to the air outlet, and the driving assembly drives each air guiding vane to change its position relative to the carrier.

The air guiding structure provided by the present application is mounted at the air outlet of the air handling device. The air guiding structure includes an adjusting assembly and a driving assembly. The driving assembly can drive the adjusting assembly to move. Where, the driving assembly can drive each air guiding vane on the carrier to move, causing each air guiding vane to change its position relative to the carrier, and the air supply angle may be adjusted by changing a deflection angle of the air guiding vane. Furthermore, the driving assembly can also drive the carrier to change its position relative to the air outlet, so as to increase a range of the deflection angle of the air guiding vane to expand an air supply zone, or adjust the air supply angle by changing the deflection angle of the carrier. In this way, the air supply angle of the air handling device can be flexibly adjusted, the air supply coverage area of the air handling device can be expanded, large-area air supply can be realized, the occurrence of an air supply blind zone can be avoided, the indoor temperature uniformity can be improved, and the indoor comfort can be enhanced.

Furthermore, by using one driving assembly to both drive the air guiding vanes to move and drive the carrier to move, the driving mode of the air guiding structure is simplified, the number and occupied space of the driving assembly can be reduced, which is conducive to lowering the energy consumption of the air guiding structure.

Another aspect of the present application provides an indoor unit, which includes a device body and the aforementioned air guiding structure, where the air guiding structure is provided at an air outlet of the device body. Since the indoor unit provided by the present application includes the aforementioned air guiding structure, it possesses all the technical effects of the air guiding structure, which will not be repeated here.

Another aspect of the present application provides an air handling device, which includes a device body and the aforementioned air guiding structure, where the air guiding structure is provided at the air outlet of the device body. Since the air handling device provided by the present application includes the aforementioned air guiding structure, it possesses all the technical effects of the air guiding structure, which will not be repeated here.

### BRIEF DESCRIPTION OF DRAWINGS

FIG. 1 is a schematic structural diagram of an air handling device provided by an embodiment of the present application.
FIG. 2 is a schematic perspective diagram of an air guiding structure provided by an embodiment of the present application.
FIG. 3 is a schematic perspective diagram of another air guiding structure provided by an embodiment of the present application.
FIG. 4 is a schematic perspective diagram of yet another air guiding structure provided by an embodiment of the present application.
FIG. 5 is a schematic diagram of an air guiding structure provided by an embodiment of the present application in an initial state.
FIG. 6 is a schematic diagram of an air guiding structure provided by an embodiment of the present application in a working state.
FIG. 7 is a schematic diagram of an air guiding structure provided by an embodiment of the present application in another working state.
FIG. 8 is a schematic diagram of a driving mode of an air guiding structure provided by an embodiment of the present application.
FIG. 9 is a cross-sectional structural diagram of a transmission component provided by an embodiment of the present application.
FIG. 10 is a planar perspective diagram of the transmission component in FIG. 9.
FIG. 11 is a schematic diagram of an action of a gear set provided by an embodiment of the present application.
FIG. 12 is a schematic diagram of an action of a gear set cooperating with an air guiding structure provided by an embodiment of the present application.
FIG. 13 is a schematic diagram of another action of a gear set provided by an embodiment of the present application.
FIG. 14 is a schematic diagram of another action of a gear set cooperating with an air guiding structure provided by an embodiment of the present application.
FIG. 15 is an exploded structural diagram of an adjusting assembly provided by an embodiment of the present application.
FIG. 16 is an exploded structural diagram of yet another adjusting assembly provided by an embodiment of the present application.
FIG. 17 is a schematic structural diagram of an air guiding vane in the adjusting assembly in FIG. 16.
FIG. 18 is a cross-sectional diagram of the air guiding vane in FIG. 17.
FIG. 19 is a schematic structural diagram of another air guiding structure provided by an embodiment of the present application.
FIG. 20 is a front diagram of the air guiding structure in FIG. 19.
FIG. 21 is a partial enlarged diagram of the air guiding vane in FIG. 20 in a vertical state.
FIG. 22 is a schematic structural diagram of an air guiding structure when an adjusting assembly is in a first position, provided by an embodiment of the present application.
FIG. 23 is a schematic structural diagram of the air guiding structure when the adjusting assembly is in a second position, provided by an embodiment of the present application.
FIG. 24 is a schematic structural diagram of the air guiding structure when the adjusting assembly is in the first position from another perspective, provided by an embodiment of the present application.
FIG. 25 is a schematic structural diagram of the air guiding structure when the adjusting assembly is in the second position from another perspective, provided by an embodiment of the present application.
FIG. 26 is a schematic structural diagram of an air guiding structure provided by an embodiment of the present application.
FIG. 27 is a schematic structural diagram of the air guiding structure in FIG. 26 in another state.

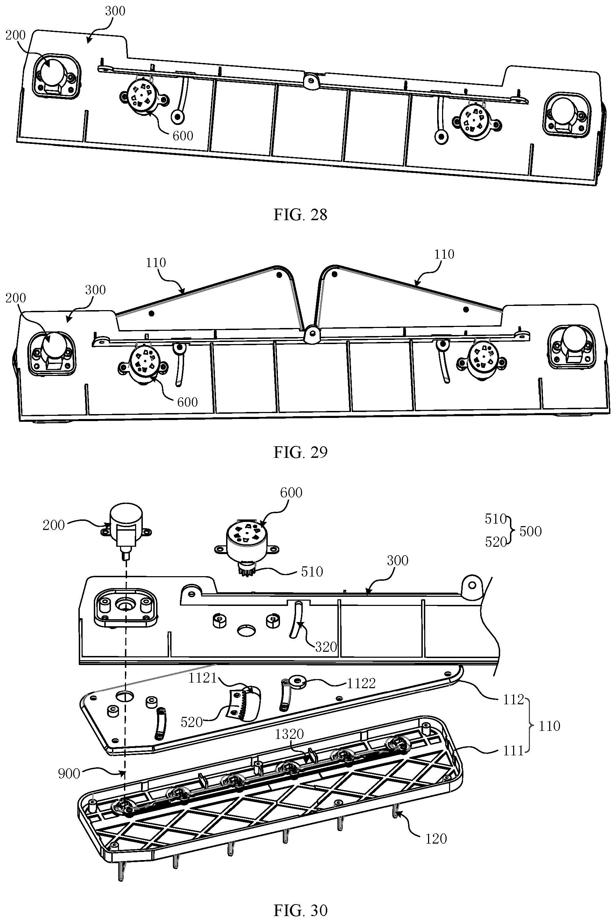

FIG. 28 is a schematic structural diagram of the air guiding structure in FIG. 26 from another perspective.
FIG. 29 is a schematic structural diagram of the air guiding structure in FIG. 28 in another state.
FIG. 30 is an exploded diagram of the air guiding structure in FIG. 29.

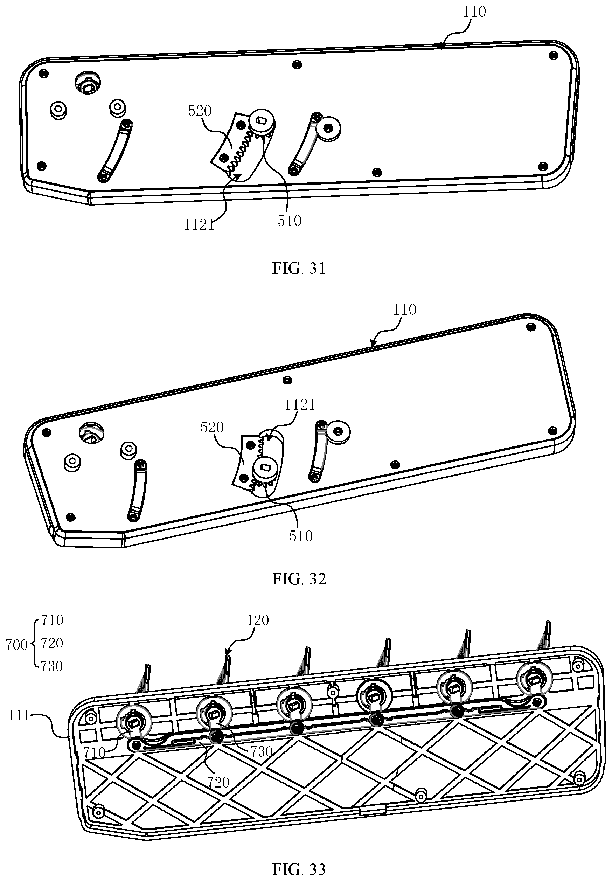

FIG. 31 is a schematic diagram of positions of a gear and an arc-shaped rack in a carrier of an air guiding structure.
FIG. 32 is a schematic diagram of a gear and an arc-shaped rack in a carrier of an air guiding structure in another position.
FIG. 33 is a schematic diagram of a connection structure between a second transmission assembly and a lower housing in FIG. 30.

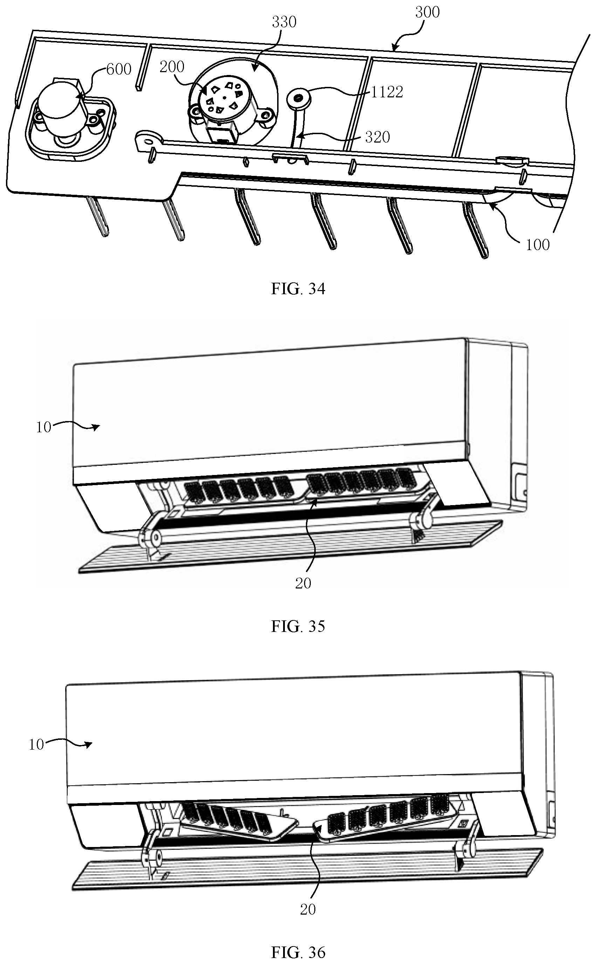

FIG. 34 is a schematic structural diagram of another air guiding structure provided by an embodiment of the present application.
FIG. 35 is a schematic structural diagram of an indoor unit provided by an embodiment of the present application.
FIG. 36 is a schematic structural diagram of the indoor unit in FIG. 35 in another state.

### DESCRIPTION OF EMBODIMENTS

As described in the background art, traditional air conditioning device is provided with swingable air deflectors in an air duct to adjust the air supply angle. For example, a horizontally set air deflector swings up and down to achieve air sweeping up and down, and a vertically set air deflector swings left and right to achieve air sweeping left and right. Where swing angles of all air deflectors are uniformly controlled through a connecting rod, thereby adjusting an overall air supply zone of the air conditioning device.

However, regarding the aforementioned way of adjusting the air supply zone, the area of the air supply zone is positively correlated with the size of the air outlet. This results in a relatively limited air supply zone of the air conditioning device, a small air supply coverage area, and failure to achieve air supply over a large area. Moreover, since the air deflectors are located in the air duct and can only deflect at the same rotation angle, an air supply blind zone will occur when adjusting the air supply angle, leading to an obvious indoor temperature difference and room for improvement in comfort.

In view of this, an embodiment of the present application provides an air guiding structure and an air handling device. The air guiding structure is mounted at the air outlet of the air handling device. The air guiding structure includes an adjusting assembly and a driving assembly. The driving assembly can drive the adjusting assembly to move. Where, the driving assembly can drive each air guiding vane on the carrier to move, causing each air guiding vane to change its position relative to the carrier, and the air supply angle may be adjusted by changing a deflection angle of the air guiding vane. Furthermore, the driving assembly can also drive the carrier to change its position relative to the air outlet, so as to increase a range of the deflection angle of the air guiding vane to expand an air supply zone, or adjust the air supply angle by changing the deflection angle of the carrier. In this way, the air supply angle of the air handling device can be flexibly adjusted, the air supply coverage area of the air handling device can be expanded, large-area air supply can be realized, occurrence of air supply blind zones can be avoided, the indoor temperature uniformity can be improved, and the indoor comfort can be enhanced.

Furthermore, by using one driving assembly to drive both the air guiding vanes and the carrier to move, the driving mode of the air guiding structure is simplified, the number and occupied space of the driving assembly can be reduced, which is conducive to lowering the energy consumption of the air guiding structure.

To make the purposes, technical solutions, and advantages of the embodiments of the present application clearer, the technical solutions in the embodiments of the present application will be clearly and completely described below with reference to the accompanying drawings in the embodiments of the present application. Obviously, the described embodiments are some of the embodiments of the present application, not all of them. Based on the embodiments in the present application, all other embodiments obtained by those of ordinary skill in the art without creative efforts shall fall within the protection scope of the present application.

An embodiment of the present application provides an air handling device, which includes but is not limited to air conditioning devices, humidifiers, dehumidifiers, ventilation devices, heat recovery ventilation systems, air purifiers, fresh air devices, etc. In the embodiment of the present application, an air conditioning device is taken as an example of the air handling device for illustration. Where the air conditioning device may include a wall-mounted air conditioner, a floor-standing air conditioner, a central air conditioner, a duct-type air conditioner, etc.

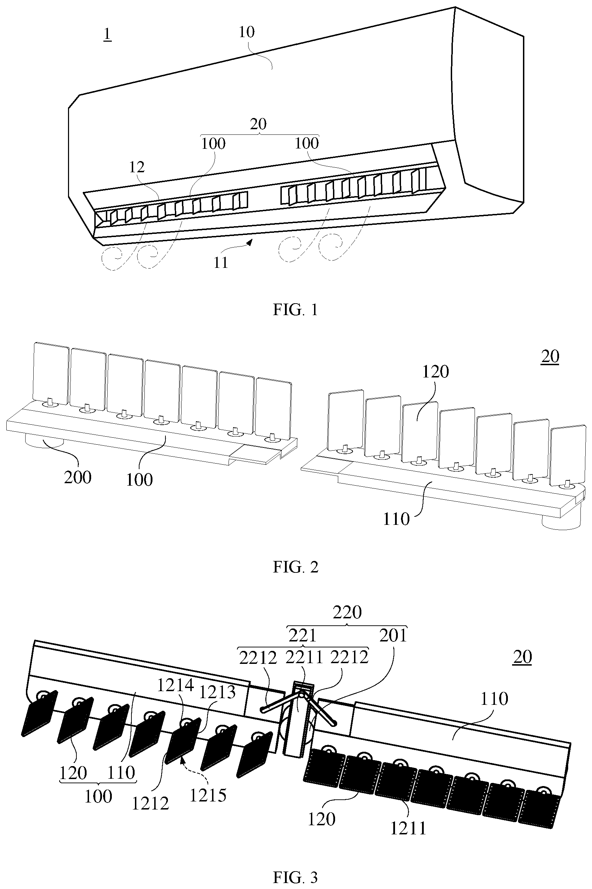

FIG. 1 is a schematic structural diagram of an air handling device provided by an embodiment of the present application. Referring to FIG. 1, the air handling device 1 includes a device body 10, the device body 10 has an air outlet 11, and the air handling device 1 supplies air outward through the air outlet 11. Taking a wall-mounted air conditioner as an example, the air handling device 1 is mounted on an indoor wall, and the air outlet 11 may be provided on a front surface (a surface facing away from the wall) of the device body 10 and is close to a lower part thereof. For example, the air outlet 11 may be provided obliquely downward, so that the air supply zone of the air handling device 1 is more appropriate.

An air guiding structure 20 is provided at the air outlet 11 of the device body 10, and an air supply direction and the air supply zone of the air handling device 1 are adjusted through the air guiding structure 20 to achieve flexible air supply of the air handling device 1.

FIG. 2 is a schematic perspective view of an air guiding structure provided by an embodiment of the present application.

Referring to FIG. 2, the air guiding structure 20 includes an adjusting assembly 100, which is provided in an air duct of the device body 10. The air duct has a mounting base for the adjusting assembly 100, and the adjusting assembly 100 can be mounted on the mounting base. For convenience of explanation, the present embodiment defines a basic air duct wall 12. The basic air duct wall 12 is, for example, a side wall surface of the air duct close to the wall, and the adjusting assembly 100 can be mounted on the basic air duct wall 12. The adjusting assembly 100 can be directly mounted on the basic air duct wall 12, or can be mounted on the basic air duct wall 12 through other supporting component. Furthermore, the adjusting assembly 100 can be located at the air outlet 11 of the device body 10. For example, the adjusting assembly 100 can cover most of the area of the air outlet 11, so as to adjust the air supply direction and air supply zone of the device body 10 through the adjusting assembly 100.

The adjusting assembly 100 may include a carrier 110 and a plurality of air guiding vanes 120. The carrier 110 can be mounted on the basic air duct wall 12, and a plate surface of the carrier 110 can be parallel to the wall surface of the basic air duct wall 12, for example. Moreover, the carrier 110 can extend along a length direction of the air outlet 11, so that the adjusting assembly 100 can cover the air outlet 11. Each air guiding vane 120 is sequentially provided along the plate surface of the carrier 110, and each air guiding vane 120 is movably connected to the carrier 110.

The carrier 110 is close to the basic air duct wall 12, so that the adjusting assembly 100 can be mounted on the basic air duct wall 12 through the carrier 110. The air guiding vane 120 can be located on the plate surface of the carrier 110 facing away from the basic air duct wall 12, the air guiding vane 120 faces toward the air outlet 11, and the air guiding vane 120 extends toward the air outlet 11. In this way, air flow in the air duct can blow out from the air outlet 11 after passing through the air guiding vane 120, so as to guide the air flow through the air guiding vane 120.

Continuing to refer to FIG. 2, the air guiding structure 20 further includes a driving assembly 200, which is connected to the adjusting assembly 100. The adjusting assembly 100 is driven to move by the driving assembly 200, so as to achieve the adjustment of the air supply direction and air supply zone by the adjusting assembly 100.

In the present embodiment, the carrier 110 is also movably connected to the basic air duct wall 12. The driving assembly 200 can drive each air guiding vane 120 on the carrier 110 to move, and the driving assembly 200 can also drive the carrier 110 to move. When the driving assembly 200 drives the carrier 110 to move, each air guiding vane 120 on the carrier 110 moves together with the carrier 110. At the same time, each air guiding vane 120 can also move relative to the carrier 110.

The movement of each air guiding vane 120 on the carrier 110 together with the carrier 110 can change a position of the air guiding vane 120 relative to the air outlet 11. The carrier 110 can move outward toward the air outlet 11, and some or even all of the air guiding vanes 120 on the carrier 110 can extend out of the air outlet 11. In this way, an interference phenomenon between the air guiding vane 120 and the air duct is significantly improved, limitation of the air duct to the deflection angle of the air guiding vane 120 can be weakened or even eliminated, and the range of the deflection angle of the air guiding vane 120 can be further expanded.

With this arrangement, the driving mechanism 200 drives both each air guiding vane 120 on the carrier 110 and the air guiding vane 120 to move together with the carrier 110, making the driving mode of the driving mechanism 200 to the adjusting assembly 100 more flexible. In this way, the air supply angle of the air guiding structure 20 can be flexibly adjusted, the air supply zone of the air guiding structure 20 can be expanded, the air supply coverage area of the air guiding structure 20 is larger, and air supply to a large area can be achieved. This may adjust the indoor temperature more quickly, improve the indoor temperature uniformity, and enhance the indoor comfort.

The driving assembly 200 may be provided on a side of the carrier 110 facing the basic air duct wall 12. That is to say, the air guiding vane 120 and the driving assembly 200 may be located on both sides of the carrier 110 in the thickness direction of the carrier 110, respectively. In this way, the driving assembly 200 can be directly connected to the carrier 110, facilitating the driving assembly 200 to drive the carrier 110 and the air guiding vane 120 on the carrier 110 to move. Moreover, the driving assembly 200 does not occupy space of the carrier 110 on the side where the air guiding vane 120 is located, so layout space of the air guiding vane 120 can be increased, which is beneficial to improving air guiding effect of the air guiding structure 20. At the same time, there is also sufficient space on the side of the carrier 110 facing the basic air duct wall 12 to arrange the driving assembly 200, which is beneficial to the design and mount of the driving assembly 200. In addition, the carrier 110 can shield the driving assembly 200, which can improve appearance effect of the air handling device 1.

The air guiding structure 20 may further include a control component, which is electrically connected to the driving assembly 200. For example, the control component is connected to the driving assembly 200 through a signal line, or the control component is connected to the driving assembly 200 in a wireless communication manner. The operation of the driving assembly 200 is controlled through the control component, so that a swing direction and the deflection angle of the air guiding vane 120 are controlled, and the swing direction and deflection angle of the carrier 110 are controlled, so as to accurately adjust the air supply direction and air supply zone of the adjusting assembly 100.

Where the driving assembly 200 drives each air guiding vane 120 on the carrier 110 to move, causing each air guiding vane 120 to change its position relative to the carrier 110. An included angle between each air guiding vane 120 and a certain direction of the plate surface of the carrier 110 changes, and each air guiding vane 120 uniformly deflects toward one side of the air outlet 11 to adjust the air supply angle of the air guiding structure 20.

The driving assembly 200 drives the carrier 110 to move, causing the carrier 110 to change its position relative to the air outlet 11, and a distance between the carrier 110 and the basic air duct wall 12 changes. The carrier 110 moves together with each air guiding vane 120 on the carrier 110, which can change the position of the air guiding vane 120 relative to the air outlet 11, and weaken or even eliminate the limitation of the air duct to the deflection angle of the air guiding vane 120. In this way, the range of the deflection angle of the air guiding vane 120 relative to the carrier 110 can be increased. When the deflection angle of the carrier 110 relative to the air outlet 11 is adjustable, on the basis of changing the deflection angle of the carrier 110, adjusting the deflection angle of the air guiding vane 120 relative to the carrier 110 can further increase the range of the deflection angle of the air guiding vane 120 relative to the air outlet 11.

With this arrangement, the driving assembly 200 drives both each air guiding vane 120 on the carrier 110 and the carrier 110 together with the air guiding vane 120 to move, making the driving mode of the driving assembly 200 to the adjusting assembly 100 more flexible. In this way, the air supply angle of the air guiding structure 20 can be flexibly adjusted, the air supply zone of the air guiding structure 20 can be expanded, the air supply coverage area of the air guiding structure 20 is larger, and air supply to a large area can be achieved. Then the indoor temperature can be adjusted more quickly, the indoor temperature uniformity can be improved, and the indoor comfort can be enhanced.

Moreover, since the driving assembly 200 can drive both each air guiding vane and the carrier 110 to move, the adjusting flexibility of the driving assembly 200 to the air guiding structure 20 is improved. The air guiding structure 20 can supply air toward more zones, and adjusting accuracy of the air guiding structure 20 to the air supply zone can be improved. In this way, adjusting the air supply angle of the air guiding structure 20 through the driving assembly 200 can make the air supply zone of the air guiding structure 20 avoid user's activity areas, and preventing physical discomfort or health issues caused by cold air blowing directly toward the user. It is also possible to continuously change the air supply angle of the air guiding structure 20 by the driving assembly 200, avoiding the air guiding structure 20 from blowing directly toward a certain area for a long time, and improving the uniformity of the overall indoor temperature.

In addition, since only one driving assembly 200 is provided in the present embodiment to drive both the air guiding vane 120 and the carrier 110 to move, the driving mode of the air guiding structure 20 is simpler, the number of the driving assembly 200 is reduced, the occupied space of the driving assembly 200 is reduced, and overall volume of the air guiding structure 20 is small. The energy consumption of the driving assembly 200 is less, which is beneficial to reducing the energy consumption of the air guiding structure 20 and improving the overall energy efficiency of the air handling device 1.

In the present embodiment, the motion mode of the carrier 110 driven by the driving assembly 200 may be swinging, and the carrier 110 may swing (also be regarded as rotating) on the basic air duct wall 12 around its own rotating shaft. This then changes the position of the carrier 110 relative to the air outlet 11, and changes the angle of the carrier 110 relative to the plane direction of the air outlet 11. Taking an end of the carrier 110 away from its own rotating shaft as a reference, the end of the carrier 110 swings toward a direction close to the air outlet 11 (for example, the end of the carrier 110 extends out of the air outlet 11), or the end of the carrier 110 swings toward a direction away from the air outlet 11 (for example, the end of the carrier 110 retracts into the air outlet 11).

In this way, the driving assembly 200 not only drives the air guiding vane 120 to swing relative to the carrier 110, changing the included angle between the air guiding vane 120 and a certain direction of the plate surface of the carrier 110 to adjust the air supply direction through the swing of the air guiding vane 120 itself; but also drives the carrier 110 to swing relative to the air outlet 11, superimposing the deflection angle of the carrier 110 on the deflection angle of the air guiding vane 120 to achieve the adjustment of the air supply direction. In this way, the range of the air supply angle of the adjusting assembly 100 is increased, the air supply zone of the adjusting assembly 100 is expanded, and the air supply coverage area of the air handling device 1 is larger.

Of course, in other embodiments, the motion mode of the carrier 110 driven by the driving assembly 200 may also be translation. The length direction of the carrier 110 is always consistent with the length direction of the air outlet 11, and the carrier 110 translates on the basic air duct wall 12 along its width direction. Furthermore, the position of the carrier 110 relative to the air outlet 11 is changed. For example, the carrier 110 moves from a position where it is accommodated in the air duct to a direction toward the air outlet 11, for example, the carrier 110 moves to the plane where the air outlet 11 is located, or even the entire carrier 110 extends out of the air outlet 11. Or, the carrier 110 moves from a position on the plane where the air outlet 11 is located or a position outside the air outlet 11 to the air duct, so that the carrier 110 is retracted into the air duct.

In this way, the driving assembly 200 can drive the carrier 110 to move toward the air outlet 11, making the air guiding vane 120 on the carrier 110 closer to the air outlet 11 or even extending out of the air outlet 11. Then the limitation of the air duct to the swing range of the air guiding vane 120 can be avoided, and the range of the deflection angle of the air guiding vane 120 can be increased. Furth, the air supply zone of the adjusting assembly 100 is expanded, and the air supply coverage area of the air handling device 1 is expanded. When the deflection angle of the air guiding vane 120 is too large and the air supply zone of the air guiding structure 20 faces an edge of the air outlet 11, the air duct can also be prevented from obstructing the air supply of the air guiding structure 20, and turbulence of the air supply flow can be avoided.

In the following, the case where the driving assembly 200 drives the carrier 110 to swing on the basic air duct wall 12 is taken as an example for illustration.

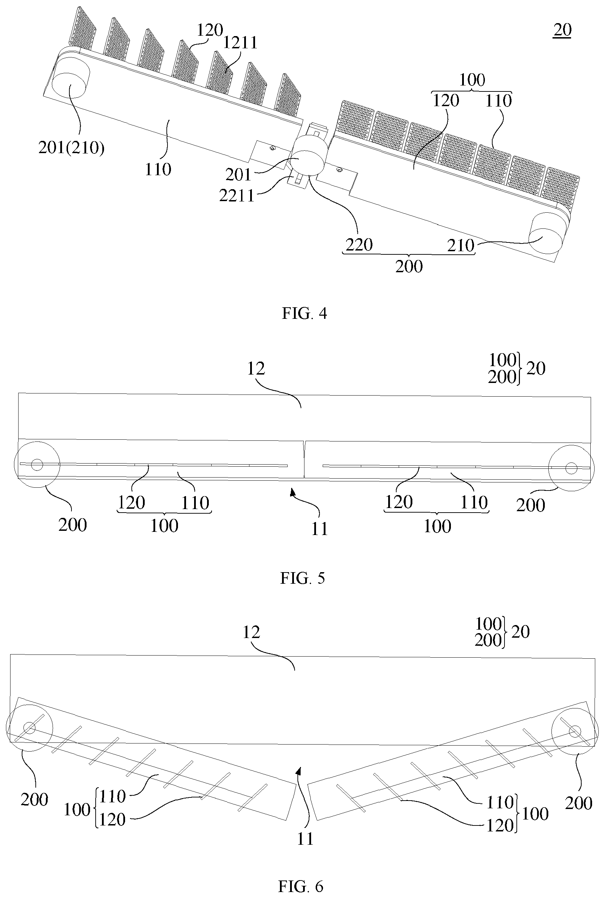

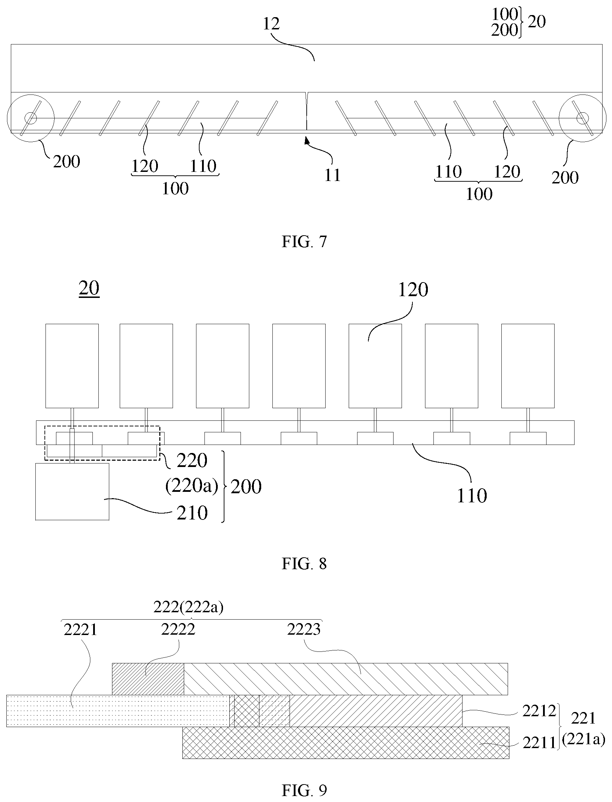

FIG. 5 is a schematic view of the air guiding structure provided by an embodiment of the present application in an initial state. FIG. 6 is a schematic view of the air guiding structure provided by an embodiment of the present application in a working state. FIG. 7 is a schematic view of the air guiding structure provided by an embodiment of the present application in another working state.

It should be noted that only a mounting structure of the air guiding structure 20 is shown in FIG. 5 to FIG. 7. In the figures, the air guiding structure 20 is schematically shown from the front view angle of the air guiding structure 20, and the front view angle of the air guiding structure 20 takes the plane where its mounting base (basic air duct wall 12) is located as the paper surface direction. Therefore, the paper surface direction can also correspond to a plane direction of the carrier 110, and a vane surface of the air guiding vane 120 is perpendicular to the paper surface direction. This does not limit a mounting orientation of the air guiding structure 20 in the entire air handling device 1.

Referring to any of FIG. 5 to FIG. 7, taking the paper surface direction shown in the figures as an example, in some implementations, the air guiding structure 20 can be used to achieve air sweeping left and right. At this time, each air guiding vane 120 mounted on the carrier 110 can be sequentially provided at intervals along the length direction of the carrier 110, and the air flow blown out from the air duct is guided through an air guiding channel formed between two adjacent left and right air guiding vanes 120. Each air guiding vane 120 can swing toward both ends of the air outlet 11 in the length direction of the air outlet 11, or in other words, each air guiding vane 120 swings toward both left and right ends of the air outlet 11, so as to guide the air flow to left or right side of the air outlet 11.

Exemplarily, each air guiding vane 120 can be rotatably connected to the carrier 110 (see FIG. 2). Where the rotating shaft of each air guiding vane 120 can be perpendicular to the plate surface of the carrier 110, and the vane surface of each air guiding vane 120 can also be perpendicular to the plate surface of the carrier 110. The driving assembly 200 can drive each air guiding vane 120 to rotate along its own rotating shaft, so as to achieve that all air guiding vanes 120 swing integrally and uniformly toward left and right ends of the air outlet 11.

In some other implementations, the air guiding structure 20 can also be used to achieve air sweeping up and down. At this time, each air guiding vane 120 mounted on the carrier 110 can be sequentially provided at intervals along the width direction of the carrier 110, and the air flow blown out from the air duct is guided through the air guiding channel formed between two adjacent upper and lower air guiding vanes 120. Each air guiding vane 120 can swing toward both ends of the air outlet 11 in a height direction (or width direction) of the air outlet 11, or in other words, each air guiding vane 120 swings toward upper and lower ends of the air outlet 11, so as to guide the air flow to the upper or lower side of the air outlet 11.

Exemplarily, each air guiding vane 120 can also be rotatably connected to the carrier 110. Where the rotating shaft of each air guiding vane 120 can be parallel to the plate surface of the carrier 110, and the air guiding vane 120 can be connected to the carrier 110 through a supporting component. For example, both ends of the air guiding vane 120 in its extending direction are its rotating shaft, the rotating shaft of the air guiding vane 120 at its both ends is rotatably connected to the carrier 110 through the supporting component, and there is a gap between the air guiding vane 120 and the plate surface of the carrier 110. The driving assembly 200 can drive each air guiding vane 120 to rotate along its own rotating shaft, so as to achieve that all air guiding vanes 120 swing integrally and uniformly toward upper and lower ends of the air outlet 11.

In other implementations, the air guiding structure 20 can also be used to achieve air sweeping in different directions. For example, the air guiding structure 20 can achieve both air sweeping up and down and air sweeping left and right. That is to say, each air guiding vane 120 can swing toward both ends (left and right ends) of the air outlet 11 in the length direction of the air outlet 11, and each air guiding vane 120 can also swing toward both ends (upper and lower ends) of the air outlet 11 in the height direction of the air outlet 11.

Exemplarily, each air guiding vane 120 can also be rotatably connected to the carrier 110. Since the air guiding structure 20 can achieve air sweeping in different directions, each air guiding vane 120 can have rotating shafts in different directions. For example, each air guiding vane 120 has a rotating shaft perpendicular to the plate surface of the carrier 110, and each air guiding vane 120 has a rotating shaft parallel to the plate surface of the carrier 110. All air guiding vanes 120 are mounted on the carrier 110 in the form of air guiding groups, for example. Each air guiding group includes a plurality of air guiding vanes 120, each air guiding group is rotatably connected to the carrier 110 through a rotating shaft perpendicular to the plate surface of the carrier 110, and each air guiding vane 120 in each air guiding group is provided with a rotating shaft parallel to the plate surface of the carrier 110.

In the following, the air guiding structure 20 shown in FIG. 5 to FIG. 7 is taken as an example for illustration, where each air guiding vane 120 is sequentially provided along the length direction of the carrier 110, each air guiding vane 120 is rotatably connected to the carrier 110, and the rotating shaft of each air guiding vane 120 is perpendicular to the plate surface of the carrier 110.

Regarding the design of the number of the adjusting assembly 100 in the air guiding structure 20, continuing to refer to FIG. 5 to FIG. 7, as an implementation, the number of the adjusting assembly 100 can be two, and the two adjusting assemblies 100 can be provided at intervals along the length direction of the air outlet 11. The number of the driving assembly 200 matches the number of the adjusting assembly 100 and can also be two. The two driving assemblies 200 are respectively connected to the two adjusting assemblies 100, and each driving assembly 200 drives one corresponding adjusting assembly 100 to move.

By providing two adjusting assemblies 100 at intervals along the length direction of the air outlet 11, and providing two driving assemblies 200 to independently drive the two adjusting assemblies 100 respectively, the two adjusting assemblies 100 can supply air to different zones respectively. The two adjusting assemblies 100 have different air supply zones respectively, which can expand the air supply zone of the air guiding structure 20 and the air supply coverage area of the air handling device 1.

Taking the paper surface direction in FIG. 5 to FIG. 7 as an example, for example, if the adjusting assembly 100 located on left side is driven by the corresponding driving assembly 200 to deflect the air guiding vane 120 of the adjusting assembly 100 to the left, and the adjusting assembly 100 located on right side is driven by the corresponding driving assembly 200 to deflect the air guiding vane 120 of the adjusting assembly 100 to the right, then the overall air supply zone of the air guiding structure 20 is expanded. Based on this, if the two driving assemblies 200 respectively drive the carrier 110 in the left adjusting assembly 100 to deflect to the left and the carrier 110 in the right adjusting assembly 100 to deflect to the right, the overall air supply zone of the air guiding structure 20 will be further expanded.

Taking the air handling device 1 as a wall-mounted air conditioner as an example, the air conditioner has a larger air supply coverage area, which can adjust the temperature of the entire indoor space more uniformly, reduce the indoor temperature difference, and improve the overall indoor comfort. Moreover, the larger air supply coverage area can also make the air conditioner reach the set temperature target faster, and the air conditioner can complete the cooling target or heating target in a shorter time, so the energy efficiency of the air conditioner is higher. In addition, the larger air supply coverage area makes a distribution zone of the air flow blown out from the air conditioner wider and the velocity of the air flow smoother, which can reduce the discomfort caused by a strong wind in a local zone, provide softer air supply effect, and make the user feel more natural and comfortable in the air-conditioned environment.

Moreover, since the two adjusting assemblies 100 are independently driven by the two driving assemblies 200, respectively, the air supply zones of the two adjusting assemblies 100 can be independently adjusted without linkage between them. In this way, the air handling device 1 can be applied to different indoor layouts and usage requirements, and the user can flexibly adjust the air supply zones of the two adjusting assemblies 100 according to actual conditions, so as to meet the requirements of different air supply zones in different environments, so that the air flow blown out by the air handling device 1 is fully and effectively utilized, avoiding waste.

The two driving assemblies 200 can be symmetrically provided, specifically they are symmetrically provided, with the central line between the two adjusting assemblies 100 as the axis of symmetry. In this way, for the entire air guiding structure 20, the structural symmetry is better, the overall stress is more balanced, the stability is better, and the reliability is higher. Moreover, when the driving capabilities of the driving assemblies 200 are consistent, the coverage ranges of the air supply zones of the two adjusting assemblies 100 remain symmetrical, the air supply coverage areas of the two are the same without obvious differences, the versatility of the air guiding structure 20 is better, and the application scenarios of the air handling device 1 are more abundant. In addition, the air guiding structure 20 is easier to assemble, there is no need to distinguish the mounting positions of the two adjusting assemblies 100, and the assembly efficiency is higher.

Based on this, the driving assembly 200 can be provided closer to one end of the corresponding adjusting assembly 100 away from another adjusting assembly 100. That is to say, the position of the driving assembly 200 is closer to an end of the air outlet 11 in the length direction of the air outlet 11. For the two adjusting assemblies 100, the two driving assemblies 200 are respectively close to two ends of the air outlet 11 in the length direction of the air outlet 11.

A rotation center of the adjusting assembly 100 is located at the position where the driving assembly 200 is located. By making the driving assembly 200 closer to one end of the adjusting assembly 100, a rotation arm between the rotation center of the adjusting assembly 100 and the other end of the adjusting assembly 100 is longer. When the driving assembly 200 is away from opposite ends of the two adjusting assemblies 100, the rotation arm between the rotation center of the adjusting assembly 100 and one end of the adjusting assembly 100 close to the central area of the air outlet 11 is longer. Under same driving efficiency of the driving assembly 200, compared with the driving assembly 200 being close to opposite ends of the two adjusting assemblies 100, when the driving assembly 200 is close to ends of the two adjusting assemblies 100 away from each other, the opposite ends of the two adjusting assemblies 100 can extend farther out of the air outlet 11.

When the opposite ends of the two adjusting assemblies 100 extend out of the air outlet 11, the carriers 110 of the two adjusting assemblies 100 deflect toward their respective sides respectively, the two adjusting assemblies 100 are in an outwardly expanded posture, and the overall air supply zone of the air guiding structure 20 is larger. The farther the opposite ends of the two adjusting assemblies 100 extend out of the air outlet 11, the more parts of the two adjusting assemblies 100 exposed outside the air outlet 11 when the two adjusting assemblies 100 are in outwardly expanded posture. In this way, the air supply zones of the two adjusting assemblies 100 are larger, and the overall air supply coverage area of the air guiding structure 20 is wider. At the same time, when the two adjusting assemblies 100 are in outwardly expanded posture, parts of the adjusting assemblies 100 located in the air duct are reduced, the shielding of the adjusting assemblies 100 by the air duct is less, and occurrence of an air supply blind zone can be avoided. Moreover, since the parts of the adjusting assemblies 100 located in the air duct are very few, motion space required by the adjusting assemblies 100 in the air duct is also smaller, which can avoid the interference between the adjusting assemblies 100 and the air duct wall, and is beneficial to reducing the overall volume of the air handling device 1.

Exemplarily, the two driving assemblies 200 can be respectively located at the ends of the two adjusting assemblies 100 away from each other. In this way, the position of the driving assembly 200 achieves an optimally designed limit, and when the two adjusting assemblies 100 are in an extremely outwardly expanded posture (the deflection angle of the carrier 110 reaches the limit), the adjusting assemblies 100 are almost entirely exposed outside. The interference and limitation of the air duct to the air guiding vane 120 are avoided, the occurrence of the air supply blind zone can be avoided, and a maximum design of the limit deflection angle of the air guiding vane 120 (the deflection angle of the air guiding vane 120 reaches the maximum) can be achieved, which can further expand the air supply zone of the adjusting assembly 100 and the overall air supply coverage area of the air guiding structure 20.

As another implementation, the air guiding structure 20 may also include only one adjusting assembly 100, and correspondingly, only one driving assembly 200 may be provided to drive the adjusting assembly 100. Under the drive of the driving assembly 200, the air guiding vane 120 of the adjusting assembly 100 can deflect relative to the carrier 110, and the carrier 110 can also deflect relative to the air outlet 11. Therefore, one adjusting assembly 100 also has a sufficiently large air supply zone, which can meet the requirement of ordinary indoor space.

For example, when the air handling device 1 is applied in a residential living space, the indoor space is small, and only one adjusting assembly 100 can meet the requirement of the indoor space. Or, when the range of the deflection angle of the air guiding vane 120 of the adjusting assembly 100 is large, the range of the deflection angle of the carrier 110 is also large, and the superposition of the air guiding vane 120 and the carrier 110 makes the adjusting assembly 100 have a large air supply zone, if one adjusting assembly 100 can also meet the air supply requirement of a large space, then the air guiding structure 20 can be provided with only one adjusting assembly 100.

When the air guiding structure 20 includes only one adjusting assembly 100, the driving assembly 200 can be connected to a middle zone of the adjusting assembly 100 in the length direction of the adjusting assembly 100. In this way, the air guiding structure 20 is subject to a more balanced overall stress and has higher reliability. And the deflection amplitudes of the adjusting assembly 100 to both sides are consistent, the air supply balance of the air guiding structure 20 is better, and the versatility is higher.

Alternatively, the driving assembly 200 can also be connected to one end of the adjusting assembly 100 in the length direction of the adjusting assembly 100. The adjusting assembly 100 rotates around its one end, and then more parts of the adjusting assembly 100 can extend out of the air outlet 11, and the adjusting assembly 100 can be almost entirely exposed outside. In this way, the interference and limitation of the air duct to the air guiding vane 120 can be avoided, the occurrence of the air supply blind zone can be avoided, and the maximum design of the limit deflection angle of the air guiding vane 120 can be achieved, so as to maximize the air supply zone of the adjusting assembly 100.

Of course, in other embodiments, the air guiding structure 20 may also include three or more adjusting assemblies 100, and these adjusting assemblies 100 are sequentially provided along the length direction of the air outlet 11. The driving mechanism 200 drives the air guiding vanes 120 of each adjusting assembly 100 to deflect relative to respective carriers 110, and the driving mechanism 200 also drives the carrier 110 of each adjusting assembly 100 to deflect relative to the air outlet 11.

Of course, in other embodiments, the air guiding structure 20 may also include three or more adjusting assemblies 100, the number of the driving assembly 200 may also be three or more, and the driving assemblies 200 may be provided in one-to-one correspondence with the air guiding structures 20. For example, when the air device has a large volume and an air outlet 11 with a long length, a plurality of adjusting assemblies 100 can be sequentially provided at intervals along the length direction of the air outlet 11, and each adjusting assembly 100 maintains an appropriate length to meet the requirements of the stability and reliability of the adjusting assembly 100. Or, when the air handling device 1 is applied in a large space such as an office or a factory, a plurality of adjusting assemblies 100 can be provided to make the air guiding structure 20 have a larger air supply coverage area so as to meet the air supply requirement for a large space.

In the present embodiment, by designing the driving assembly 200, the driving assembly 200 can drive the air guiding vane 120 to rotate continuously, and when the carrier 110 needs to swing, the driving assembly 200 also drives the carrier 110 to swing. Therefore, the motion modes of the adjusting assembly 100 driven by the driving assembly 200 include two types, which are the first motion mode and the second motion mode respectively.

The first motion mode is that the air guiding vane 120 swings and the carrier 110 moves. That is to say, when the driving assembly 200 operates, it drives the air guiding vane 120 to swing on the carrier 110, and at the same time, also drives the carrier 110 to move. The second motion mode is that the air guiding vane 120 swings and the carrier 110 does not move. That is to say, when the driving assembly 200 operates, it only drives the air guiding vane 120 to move on the carrier 110, while the carrier 110 remains stationary.

It should be noted that the driving assembly 200 can drive the carrier 110 to move between an initial position and a limit position. When the carrier 110 is in the initial position, the carrier 110 is completely accommodated in the air outlet 11 (or the air duct), and the length direction of the carrier 110 can be parallel to the length direction of the air outlet 11. When the carrier 110 is in the limit position, the carrier 110 can at least partially extend out of the air outlet 11. Taking the driving assembly 200 driving the carrier 110 to swing as an example, the limit position of the carrier 110 is its limit deflection position. When the carrier 110 is in the limit deflection position, a side of the carrier 110 located at a certain position of the driving assembly 200 (this position is the rotation center of the carrier 110) can extend out of the air outlet 11.

The carrier 110 can remain stationary at the initial position, and the carrier 110 can also remain stationary at the limit position. Therefore, when the adjusting assembly 100 is in the first motion mode, the carrier 110 can move between the initial position and the limit position, and at the same time, the air guiding vane 120 rotates on the carrier 110 around its own rotating shaft. When the adjusting assembly 100 is in the second motion mode, the carrier 110 can stay at the initial position or the limit position, and only the air guiding vane 120 rotates on the carrier 110 around its own rotating shaft.

Specifically, when a control component does not receive a demand signal for the air supply angle, the adjusting assembly 100 can be in the initial state. After the control component receives the demand signal for the air supply angle γ sent by the user, the control component controls the driving assembly 200 to operate. And according to a specific size of the air supply angle γ, the driving assembly 200 drives the adjusting assembly 100 to move in the first motion mode or the second motion mode.

Referring to FIG. 4, in order to achieve that the driving mechanism 200 can both drive each air guiding vane in the adjusting assembly to deflect relative to the carrier and drive the carrier to deflect relative to the air outlet. The driving mechanism 200 may include a first driving assembly 210, which is connected to the adjusting assembly. The first driving assembly 210 is at least used to drive each air guiding vane in the adjusting assembly to deflect relative to the carrier.

The first driving assembly 210 can be provided in one-to-one correspondence with the adjusting assembly. When the air guiding structure includes two or more adjusting assemblies, the driving mechanism 200 can also include two or more first driving assemblies 210, and each first driving assembly 210 is correspondingly connected to each adjusting assembly, so as to drive the corresponding adjusting assembly to move through the first driving assembly 210.

Referring to FIG. 4, in some implementations, when the air guiding structure includes two or more adjusting assemblies, the driving mechanism 200 may also include at least one second driving assembly 220, which may be connected between two adjacent adjusting assemblies. At this time, the first driving assembly 210 can only be used to drive each air guiding vane to deflect relative to the carrier, and the second driving assembly 220 drives the carriers in two adjusting assemblies connected to both sides of the second driving assembly 220 to move.

When the air guiding structure includes two adjusting assemblies, the driving mechanism 200 may be provided with only one second driving assembly 220, which is connected between the two adjusting assemblies. The second driving assembly 220 can drive the carriers of the two adjusting assemblies to move relatively.

When the air guiding structure includes three or more adjusting assemblies, one second driving assembly 220 can be provided between each two adjacent adjusting assemblies, and the second driving assembly 220 drives the carriers of the adjacent adjusting assemblies to move relatively. Or, only one second driving assembly 220 can be provided between two adjacent adjusting assemblies, and other adjacent adjusting assemblies are connected through a transmission structure. The driving force of the second driving assembly 220 is transmitted through the transmission structure, to enable the carriers of all adjusting assemblies to move.

By providing the first driving assembly 210 to drive the air guiding vane and the second driving assembly 220 to drive the carrier, the first driving assembly 210 and the second driving assembly 220 respectively drive one motion object. This driving mode is relatively simple, and a structural design of the first driving assembly 210 and the second driving assembly 220 can also be relatively simplified. In this way, design difficulty of the first driving assembly 210 and the second driving assembly 220 is low, and design cost of both can be reduced. Moreover, the first driving assembly 210 and the second driving assembly 220 do not affect each other, and even if one of them fails and cannot work, the other is not affected. The probability that both the air guiding vane and the carrier cannot move is low, and the operation reliability of the air guiding structure is higher.

In some other implementations, the driving mechanism 200 may only include the first driving assembly 210, which both drives each air guiding vane of the adjusting assembly to deflect relative to the carrier and drives the carrier to deflect relative to the air outlet. In this case, no matter how many adjusting components are included in the air guiding structure, only one first driving component 210 needs to be provided corresponding to each adjusting component.

When the air guiding structure includes two or more adjusting assemblies, each adjusting assembly is independently driven by the first driving assembly 210. There is no linkage between these adjusting assemblies, and the air supply zone of each adjusting assembly can be independently adjusted. In this way, the air handling device can be applied to different indoor layouts and usage requirements, and the user can flexibly adjust the air supply zones of the two adjusting assemblies according to actual conditions, so as to meet the requirements of different environments to different air supply zones, so that the air flow blown out by the air handling device is fully and effectively utilized, avoiding waste.

Regarding an architectural design of the first driving assembly 210, referring to FIG. 4, when the first driving assembly 210 only drives each air guiding vane on the carrier to move, the first driving assembly 210 may only include one driving motor 201. An output shaft of the driving motor 201 can directly transmit power to the air guiding vane, or the output shaft of the driving motor 201 can transmit power to the air guiding vane after being decelerated and torque-increased via a reduction gear.

When the first driving assembly 210 drives both the air guiding vane and the carrier, as an implementation, the first driving assembly 210 may be provided with two driving motors 201. One of the driving motors 201 transmits power to the air guiding vane, and the other driving motor 201 transmits power to the carrier. In this way, the two driving motors 201 do not affect each other, and even if one of them fails and cannot work, the other is not affected. The probability that both the air guiding vane and the carrier cannot move is low, and the operation reliability of the adjusting assembly is higher.

When the first driving assembly 210 drives both the air guiding vane and the carrier, as another implementation, the first driving assembly 210 may also be provided with only one driving motor 201. The output shaft of the driving motor 201 can directly transmit power to the air guiding vane, and the output shaft of the driving motor 201 transmits power to the carrier through a transmission structure, so as to drive both the air guiding vane and the carrier to move through one driving motor 201. Exemplarily, the transmission structure may be a gear set. The driving motor 201 directly drives the air guiding vane to rotate, and the driving motor 201 drives the carrier to swing through the gear set.

Regarding the architectural design of the second driving assembly 220, referring to FIG. 3 and FIG. 4, the second driving assembly 220 may include a driving motor 201 and a transmission component 221. The driving motor 201 is drivingly connected to the transmission component 221, and the transmission component 221 is connected between the carriers of two adjacent adjusting assemblies. The driving motor 201 drives the transmission component 221 to move, and the transmission component 221 drives the two carriers to move relative to each other.

Exemplarily, the transmission component 221 may include a push-pull rod 2211 and two connecting rods 2212. The driving motor 201 is drivingly connected to the push-pull rod 2211, one end of each of the two connecting rods 2212 is connected to the push-pull rod 2211, and the other ends of the two connecting rods 2212 are respectively connected to the two carriers. The driving motor 201 drives the push-pull rod 2211 to move in the plane direction in which the plate surface of the carrier is located, so that the push-pull rod 2211 drives the two connecting rods 2212 to move relative to each other, and thus drives the two carriers to swing relative to each other.

Referring to FIG. 5, it shows that the air guiding structure 20 is in an initial state. When the adjusting assembly 100 is in an initial state, both the carrier 110 and the air guiding vane 120 are in an initial positions. Where when the carrier 110 is in the initial position, the carrier 110 is completely accommodated in the air outlet 11, and the length direction of the carrier 110 is parallel to the length direction of the air outlet 11. When the air guiding vane 120 is in the initial position, the air guiding vane 120 is parallel to the length direction of the carrier 110 (at this time, vane surfaces of all air guiding vanes 120 are in the same plane). That is to say, when the adjusting assembly 100 is in the initial state, the air guiding vane 120 is parallel to the length direction of the air outlet 11, and the included angle between the air guiding vane 120 and a long side of the air outlet 11 is 0°.

For convenience of explaining the working principle of the air guiding structure 20, in the present embodiment, it defines the limit deflection angle of the air guiding vane 120 is α. The limit deflection angle of the air guiding vane 120 is a maximum deflection angle of the air guiding vane 120 relative to its initial position. The limit deflection angle α of the air guiding vane 120 is an included angle between the air guiding vane 120 and the length direction of the carrier 110 when the air guiding vane 120 is in a limit deflection position.

In addition, in the present embodiment, it defines the limit deflection angle of the carrier 110 is β. The limit deflection angle of the carrier 110 is a maximum deflection angle of the carrier 110 relative to its initial position. The limit deflection angle β of the carrier 110 is an included angle between the carrier 110 and the length direction of the air outlet 11 when the carrier 110 is in a limit deflection position.

Referring to FIG. 6, it shows that the air guiding structure 20 is in a first working state. When an air supply angle θ is greater than the limit deflection angle α of the air guiding vane 120, the driving assembly 200 drives the air guiding vane 120 to rotate relative to the carrier 110, and at the same time, the driving assembly 200 also drives the carrier 110 to swing relative to the air outlet 11.

At this time, the driving assembly 200 first drives the adjusting assembly 100 to move in the first motion mode. The driving assembly 200 drives the carrier 110 to rotate around a certain position of the driving assembly 200 as the center, the carrier 110 swings to its limit deflection position, and a rotation angle of the carrier 110 relative to its initial position is the limit deflection angle β. During this period, the driving assembly 200 also drives the air guiding vane 120 to rotate by an angle γ on the carrier 110 around its own rotating shaft. In this way, a rotation angle of the air guiding vane 120 relative to its initial position is β + γ.

If the required air supply angle θ is still not met, the driving assembly 200 continues to drive the adjusting assembly 100 to move in the second motion mode. The driving assembly 200 limits the carrier 110 at the limit deflection position, and the carrier 110 no longer rotates. At the same time, the driving assembly 200 drives the air guiding vane 120 to rotate by an angle δ on the carrier 110 around its own rotating shaft. Then, a rotation angle of the air guiding vane 120 relative to its initial position is β + γ + δ, and θ = β + γ + δ.

Referring to FIG. 7, it shows that the air guiding structure 20 is in a second working state. When the air supply angle θ is smaller than the limit deflection angle α of the air guiding vane 120, the driving assembly 200 only needs to drive the air guiding vane 120 to rotate relative to the carrier 110, and the carrier 110 can remain stationary at the initial position.

At this time, the driving assembly 200 drives the adjusting assembly 100 to move in the second motion mode. The driving assembly 200 limits the carrier 110 to the initial position, and the carrier 110 does not rotate. Moreover, the driving assembly 200 only drives the air guiding vane 120 to rotate by an angle δ on the carrier 110 around its own rotating shaft. Then, a rotation angle of the air guiding vane 120 relative to its initial position is δ, and θ=δ.

FIG. 8 is a schematic diagram of the driving method of the air guiding structure provided in the embodiment of the present application. Referring to FIG. 8, in the present embodiment, the driving assembly 200 for driving the adjusting assembly 100 to move includes a driving motor 210 and a transmission component 220, where the transmission component 220 is drivingly connected between the driving motor 210 and the adjusting assembly 100. The driving motor 210 is used to provide a driving force, and the driving motor 210 may be electrically connected to the control component to control the operation of the driving motor 210 through the control component. The transmission component 220 is used to transmit the power of the driving motor 210 to the adjusting assembly 100 so as to drive the adjusting assembly 100 to move.

The carrier 110 may be drivingly connected to the transmission component 220. The driving assembly 200 transmits the driving force to the transmission component 220, which then drives the carrier 110 to move. Each air guiding vane 120 on the carrier 110 may be directly connected to an output end of the driving motor 210, which directly drives each air guiding vane 120 to rotate. Alternatively, each air guiding vane 120 may also be connected to the transmission component 220, and the transmission component 220 drives each air guiding vane 120 to rotate.

With this configuration, only one driving motor 210 cooperating with the transmission component 220 can both drive each air guiding vane 120 on the carrier 110 to rotate and drive the carrier 110 to move. The structure of the driving assembly 200 is simpler, and the driving method of the adjusting assembly 100 is simplified. In addition, the driving assembly 200 has no other driving component, so the overall driving assembly 200 occupies less space and has a lighter weight, which can save the space of the air guiding structure 20, facilitate the layout design of other components in the air handling device 1, and is conducive to the overall weight reduction of the air handling device 1. Furthermore, only one driving motor 210 is used to drive the adjusting assembly 100 to move, which minimizes the number of the driving motor 210 used, and may reduce the energy consumption of the air guiding structure 20.

In the driving assembly 200, the transmission component 220 may include a first transmission portion 221 and a second transmission portion 222 (see FIG. 9). The first transmission portion 221 is connected to the driving motor 210, and the second transmission portion 222 is drivingly connected between the first transmission portion 221 and the carrier 110. The driving motor 210 may directly drive each air guiding vane 120 to rotate, or the driving motor 210 may drive each air guiding vane 120 to rotate through the first transmission portion 221. Moreover, the driving motor 210 may transmit power to the first transmission portion 221, and the first transmission portion 221 and the second transmission portion 222 transmit power to each other, and finally the second transmission portion 222 drives the carrier 110 to move.

The first transmission portion 221 is directly connected to the driving motor 210, and the first transmission portion 221 may operate continuously when the driving motor 210 operates continuously. In this way, whether the driving motor 210 directly drives each air guiding vane 120 to rotate or drives each air guiding vane 120 to rotate through the first transmission portion 221, continuous rotation of each air guiding vane 120 can be achieved.

By designing the architecture of the first transmission portion 221 and the second transmission portion 222, the first transmission portion 221 can either transmit power to the second transmission portion 222 or not transmit power to the second transmission portion 222. When the first transmission portion 221 transmits the power to the second transmission portion 222, the second transmission portion 222 operates and drives the carrier 110 to move. At this time, each air guiding vane 120 rotates relative to the carrier 110, and the carrier 110 also moves relative to the air outlet 11. When the first transmission portion 221 does not transmit the power to the second transmission portion 222, the second transmission portion 222 stops operating and limits the carrier 110 to its current position (e.g., the initial position or the limit position). At this time, only each air guiding vane 120 rotates relative to the carrier 110, and the carrier 110 remains stationary.

Exemplarily, the second transmission portion 222 may be located on a side of the first transmission portion 221 close to the carrier 110. In this way, the first transmission portion 221 is adjacent to the second transmission portion 222, facilitating power transmission between them. The second transmission portion 222 is also closer to the carrier 110, facilitating the connection between the second transmission portion 222 and the carrier 110. In addition, the first transmission portion 221 and the second transmission portion 222 are provided in a stacked manner, so the volume of the transmission component 220 is smaller, the overall space occupied by the driving assembly 200 is smaller, and the integration degree is higher.

It should be noted that in the present embodiment, the second transmission portion 222 is located on a side of the first transmission portion 221 close to the carrier 110, which does not limit the entire second transmission portion 222 to be completely located on the side of the first transmission portion 221. The second transmission portion 222 and the first transmission portion 221 may also have part located in the same space to facilitate transmission cooperation between the second transmission portion 222 and the first transmission portion 221.

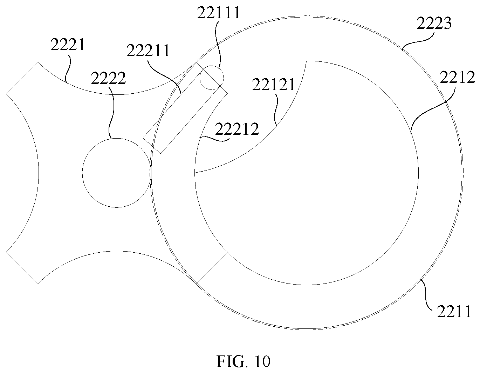

FIG. 9 is a cross-sectional structural diagram of a transmission component provided in the embodiment of the present application. FIG. 10 is a planar perspective view of the transmission component in FIG. 9.

Referring to FIG. 9 and FIG. 10, in the present embodiment, the transmission component 220 drivingly connected between the driving assembly 200 and the carrier 110 may be a gear set 220a. Using the gear set 220a as the transmission component 220, the transmission between the driving motor 210 and the carrier 110 is achieved through a gear transmission method.

The gear set 220a achieves transmission mainly by arranging gears that are meshed with each other and coaxial, and is mainly used to drive a target structural component to rotate. In this way, the gear set 220a can drive the carrier 110 to swing to change the included angle between the carrier 110 and the length direction of the air outlet 11. Moreover, the gear set 220a has a tight fit, gears in the gear set 220a are meshed, stacked, and butted, the overall volume of the gear set 220a is small, which is conducive to reducing the overall space occupied by the driving assembly 200. In addition, the gear set 220a can achieve precise transmission, and not only has high transmission efficiency but also high transmission accuracy, thereby improving the driving accuracy of the driving assembly 200, and enabling the air guiding structure 20 to adjust the air supply angle with higher accuracy.

Of course, in other embodiments, the transmission component 220 may also have other architecture forms, and the transmission component 220 may transmit power through other transmission methods. For example, the transmission component 220 may be a connecting rod 130a transmission, a telescopic rod transmission, a rack-and-pinion transmission, or other transmission architectures. The transmission component 220 may drive the carrier 110 to swing, or the transmission component 220 may drive the carrier 110 to translate. This embodiment has no limitation on this.

Continuing to refer to FIG. 9 and FIG. 10, the gear set 220a may specifically include a first gear pair 221a and a second gear pair 222a. The first gear pair 221a and the second gear pair 222a correspond to the aforementioned first transmission portion 221 and second transmission portion 222, respectively. The first gear pair 221a is drivingly connected to the driving motor 210, for example, the first gear pair 221a may be connected to the output shaft of the driving motor 210. The second gear pair 222a is drivingly connected between the first gear pair 221a and the carrier 110.

The second gear pair 222a may be located on a side of the first gear pair 221a close to the carrier 110, facilitating transmission connection between the first gear pair 221a and the second gear pair 222a, and facilitating the connection between the second gear pair 222a and the carrier 110. In a thickness direction of the carrier 110, the second gear pair 222a and the first gear pair 221a may have part located in the same thickness space to facilitate the transmission cooperation between the second gear pair 222a and the first gear pair 221a. Details are not described herein.

The gear set 220a may avoid the output shaft of the driving motor 210, and the output shaft of the driving motor 210 is directly drivingly connected to each air guiding vane 120, the driving motor 210 drives each air guiding vane 120 to rotate continuously. Alternatively, the first gear pair 221a is connected to the output shaft of the driving motor 210, and the first gear pair 221a is drivingly connected to each air guiding vane 120, and drives each air guiding vane 120 to rotate continuously. The second gear pair 222a is drivingly connected to the carrier 110; when the first gear pair 221a transmits power to the second gear pair 222a, the second gear pair 222a drives the carrier 110 to swing; when the first gear pair 221a does not transmit power to the second gear pair 222a, the carrier 110 remains stationary.

Combining FIG. 9 and FIG. 10, the first gear pair 221a may include a driving wheel 2211, which is connected to the output shaft of the driving motor 210. The second gear pair 222a may include a first transmission wheel 2221, which is provided on a side of the driving wheel 2211 close to the carrier 110. The first transmission wheel 2221 is in transmission cooperation with the driving wheel 2211, and the first transmission wheel 2221 is drivingly connected to the carrier 110.

After the driving motor 210 is started, it can drive the driving wheel 2211 to rotate continuously. By the transmission design between the driving wheel 2211 and the first transmission wheel 2221, during the rotation of the driving wheel 2211, the driving wheel 2211 can either transmit power to the first transmission wheel 2221 so as to drive the first transmission wheel 2221 to rotate, or not transmit power to the first transmission wheel 2221, leaving the first transmission wheel 2221 stationary. For example, when the driving wheel 2211 rotates within a certain angle range, it drives the first transmission wheel 2221 to rotate; when the driving wheel 2211 rotates within other angle range, the first transmission wheel 2221 remains stationary.

That is to say, through the transmission cooperation between the driving wheel 2211 and the first transmission wheel 2221, the adjusting assembly 100 can move in the aforementioned first or second motion mode. When the driving wheel 2211 drives the first transmission wheel 2221 to rotate synchronously, the air guiding vanes 120 swing, the carrier 110 moves, and the adjusting assembly 100 moves in the first motion mode. When the driving wheel 2211 rotates and the first transmission wheel 2221 remains stationary, the air guiding vanes 120 swing, the carrier 110 remains stationary, and the adjusting assembly 100 moves in the second motion mode.

Continuing to refer to FIG. 9 and FIG. 10, as an implementation, the first transmission wheel 2221 and the driving wheel 2211 may partially overlap, and a transmission rod 22111 may be provided on a side of the driving wheel 2211 facing the first transmission wheel 2221. A transmission groove 22211 may be opened on the first transmission wheel 2221, and the transmission groove 22211 may be in communication with a side wall of the first transmission wheel 2221. When the first transmission wheel 2221 is mounted, the transmission groove 22211 on the first transmission wheel 2221 is provided toward the driving wheel 2211, so that a notch of the transmission groove 22211 is within a coverage range of the driving wheel 2211 and on a circular trajectory formed by the rotation of the transmission rod 22111 on the driving wheel 2211.

During the rotation of the driving wheel 2211 driven by the driving motor 210, the transmission rod 22111 on the driving wheel 2211 performs a circular movement. When the transmission rod 22111 on the driving wheel 2211 rotates to a position of the notch of the transmission groove 22211 on the first transmission wheel 2221, as the driving wheel 2211 continues to rotate, the transmission rod 22111 will enter the transmission groove 22211. And the transmission rod 22111 slides along the transmission groove 22211. During this period, the first transmission wheel 2221 is acted upon by an external force exerted by the transmission rod 22111 and rotates synchronously with the driving wheel 2211. Thus, the driving motor 210 or the driving wheel 2211 drives the air guiding vanes 120 to swing, and at the same time, the first transmission wheel 2221 drives the carrier 110 to swing, so that the adjusting assembly 100 moves in the first motion mode.

As the driving wheel 2211 continues to rotate, the transmission rod 22111 will disengage from the transmission groove 22211. After the transmission rod 22111 disengages from the transmission groove 22211, the first transmission wheel 2221 is no longer subjected to the external force, and will stop rotating and stay at the current position (at this time, the carrier 110 may stay at the limit position). Thereafter, the driving wheel 2211 continues to rotate in the original direction, the transmission rod 22111 will move away from the first transmission wheel 2221, and the notch of the transmission groove 22211 can no longer align with the transmission rod 22111, the driving wheel 2211 will not drive the first transmission wheel 2221 to rotate again. During this period, the adjusting assembly 100 moves in the second motion mode.

To allow the driving wheel 2211 to drive the first transmission wheel 2221 to rotate again, the driving motor 210 can be reversely rotated to cause the driving wheel 2211 to rotate in reverse direction. While the driving wheel 2211 is rotating in reverse direction, the transmission rod 22111 on the driving wheel 2211 moves toward the first transmission wheel 2221, and the transmission rod 22111 can rotate to align with the notch of the transmission groove 22211. After the transmission rod 22111 enters the transmission groove 22211, during sliding of the transmission rod 22111 along the transmission groove 22211, the first transmission wheel 2221 can be driven to rotate again. At this time, the first transmission wheel 2221 also rotates in reverse direction and drives the carrier 110 to swing in reverse direction so as to return the carrier 110 to its initial position.

The transmission groove 22211 may extend radially along the first transmission wheel 2221. During the rotation of the first transmission wheel 2221 driven by the driving wheel 2211, a movement trajectory of the transmission groove 22211 is always matched with the circular trajectory of the transmission rod 22111. That is to say, a center line of the width direction of the transmission groove 22211 is always tangent to the circular trajectory of the transmission rod 22111. This may ensure that the transmission rod 22111 can slide smoothly along the transmission groove 22211 without interference, jamming or other problems between them, and the driving wheel 2211 can drive the first transmission wheel 2221 to rotate smoothly.

Continuing to refer to FIG. 9 and FIG. 10, the first gear pair 221a may further include a first driven wheel 2212, which is coaxially provided on a side of the driving wheel 2211 close to the carrier 110. In other words, the first driven wheel 2212 and the first transmission wheel 2221 may be arranged side by side in the same space. In this way, on the basis that the first transmission wheel 2221 and the driving wheel 2211 only partially overlap, the first driven wheel 2212 makes the gear set 220a have more overlapping part, and the first driven wheel 2212 increases the counterweight of the gear set 220a, making the gear set 220a more stable and reliable.

The first driven wheel 2212 and the first transmission wheel 2221 should not interfere with each other and have no overlapping or overlapping part between them. In this way, the first driven wheel 2212 will not affect the rotation of the first transmission wheel 2221, ensuring that the driving wheel 2211 can drive the first transmission wheel 2221 to rotate smoothly.

As an implementation, an outer peripheral wall of the first transmission wheel 2221 may have at least one concave arc surface 22212, which matches an outer circular surface of the first driven wheel 2212. In other words, a center of a circumference where the concave arc surface 22212 of the first transmission wheel 2221 is located should coincide with a center of the outer circular surface of the first driven wheel 2212. When the gear set 220a is assembled, the transmission groove 22211 on the first transmission wheel 2221 faces the first driven wheel 2212, and meanwhile the part of the outer peripheral wall of the first transmission wheel 2221 facing the first driven wheel 2212 should also be a concave arc surface 22212. While ensuring that the transmission rod 22111 can enter the transmission groove 22211, the concave arc surface 22212 of the first transmission wheel 2221 can cooperate with the outer circular surface of the first driven wheel 2212.

During the rotation of the first transmission wheel 2221 driven by the driving wheel 2211, the outer circular surface of the first driven wheel 2212 slides along the concave arc surface 22212 of the first transmission wheel 2221. In this way, the first driven wheel 2212 and the first transmission wheel 2221 do not interfere with each other, and the rotation of the first transmission wheel 2221 is not affected. Moreover, there are friction surfaces that cooperate with each other between the first driven wheel 2212 and the second transmission wheel 2223, and a certain friction force is generated between them, which can make the movement of the first transmission wheel 2221 more stable and reliable.

Exemplarily, the outer peripheral wall of the first transmission wheel 2221 may have two or more concave arc surfaces 22212, and each concave arc surface 22212 is provided at uniform intervals along the circumferential direction of the first transmission wheel 2221. In this way, the first transmission wheel 2221 has a more regular the contour and better symmetry. This facilitates processing and manufacturing of the first transmission wheel 2221; the transmission groove 22211 can be provided corresponding to any concave arc surface 22212, which can reduce the processing difficulty of the first transmission wheel 2221 and improve the processing efficiency of the first transmission wheel 2221. Moreover, the first transmission wheel 2221 has a more regular structure and better stability, the volume of the first transmission wheel 2221 extending outside the driving wheel 2211 is smaller, and the overall operation reliability of the gear set 220a is higher.

Of course, on the premise of ensuring the operation reliability of the gear set 220a, only one concave arc surface 22212 may be provided on the outer peripheral wall of the first transmission wheel 2221, and remaining part of the outer peripheral wall of the first transmission wheel 2221 are all outer circular surfaces. The present embodiment has no specific limitation on this.

Since the transmission rod 22111 is provided on the surface of the driving wheel 2211 facing the first driven wheel 2212, an avoidance recess 22121 may be provided on the outer peripheral wall of the first driven wheel 2212, to ensure that the transmission rod 22111 can reliably cooperate with the transmission groove 22211 of the first transmission wheel 2221. The avoidance recess 22121 is used to avoid the transmission rod 22111 on the driving wheel 2211, and the transmission rod 22111 is located on the side of the avoidance recess 22121 to leave a certain space in the outer circumference of the transmission rod 22111 and avoid interfering with the cooperation between the transmission rod 22111 and the avoidance groove.

For example, the avoidance recess 22121 may be an arc-shaped concave surface, an axis center of the transmission rod 22111 may be located on a radial line of the arc-shaped concave surface, and distances from the axis center of the transmission rod 22111 to both ends of the arc-shaped concave surface are equal. In this way, the transmission rod 22111 can be used as a positioning datum to position the first driven wheel 2212 when assembling the first driven wheel 2212 with the driving wheel 2211. In addition, the first driven wheel 2212 and the driving wheel 2211 form a symmetrical structure after assembly, resulting in a better appearance.

Continuing to refer to FIG. 9 and FIG. 10, the second gear pair 222a may further include a second driven wheel 2222, which is coaxially provided on the side of the first transmission wheel 2221 close to the carrier 110, and the carrier 110 is drivingly connected to the second driven wheel 2222. In this way, the second driven wheel 2222 is closer to the carrier 110, facilitating the connection between the second gear pair 222a and the carrier 110.

Moreover, since the second driven wheel 2222 is coaxially provided with the first transmission wheel 2221, the second driven wheel 2222 rotates synchronously with the first transmission wheel 2221. When the second driven wheel 2222 rotates synchronously with the first transmission wheel 2221, it drives the carrier 110 to swing. When the second driven wheel 2222 is stationary with the first transmission wheel 2221, the carrier 110 is confined to its initial position or limit position, and remains stationary.

Based on this, the second gear pair 222a may further include a second transmission wheel 2223, which is provided on the side of the first driven wheel 2212 close to the carrier 110. Moreover, the second transmission wheel 2223 is meshed with the second driven wheel 2222, and the carrier 110 is connected to the second transmission wheel 2223, which drives the carrier 110 to rotate.

Transmission ratios of the second transmission wheel 2223 and the second driven wheel 2222 may be inconsistent. In other words, the outer diameter of the second transmission wheel 2223 and the outer diameter of the second driven wheel 2222 may be different. Thus, by providing the second transmission wheel 2223 to mesh with the second driven wheel 2222, a rotational speed of the second driven wheel 2222 is consistent with that of the first transmission wheel 2221, but the rotational speed of the second transmission wheel 2223 is inconsistent with that of the second driven wheel 2222. In this way, the size of the second driven wheel 2222 can be selected according to the required swing speed of the carrier 110, so that an appropriate transmission ratio is maintained between the second driven wheel 2222 and the second transmission wheel 2223, and the rotational speed of the second transmission wheel 2223 is controlled within a suitable range to ensure stable swing of the carrier 110.

Since the rotational speed output by the driving motor 210 is usually high, when transmitting power to a structural component, it is often necessary to reduce the rotational speed and increase the torque of the driving motor 210 to meet the rotation requirements of the structural component. In this regard, the outer diameter of the second transmission wheel 2223 may be larger than that of the second driven wheel 2222, and the second transmission wheel 2223 may play a role in reducing speed and increasing torque to maintain the carrier 110 at an appropriate swing speed. Moreover, the torque between the second transmission wheel 2223 and the carrier 110 is larger, which can make the movement of the carrier 110 more stable and reliable.

The second transmission wheel 2223 can adjust the output rotational speed of the second gear pair 222a, and also by providing the second transmission wheel 2223 on the first driven wheel 2212, the second transmission wheel 2223 can play a role in adjusting the overall center of gravity of the gear set 220a to make the entire gear set 220a more stable and reliable. Where the second transmission wheel 2223 and the first transmission wheel 2221 may partially overlap, and both sides of the first transmission wheel 2221 are supported by the driving wheel 2211 and the second transmission wheel 2223, making the overall structure of the gear set 220a more stable.

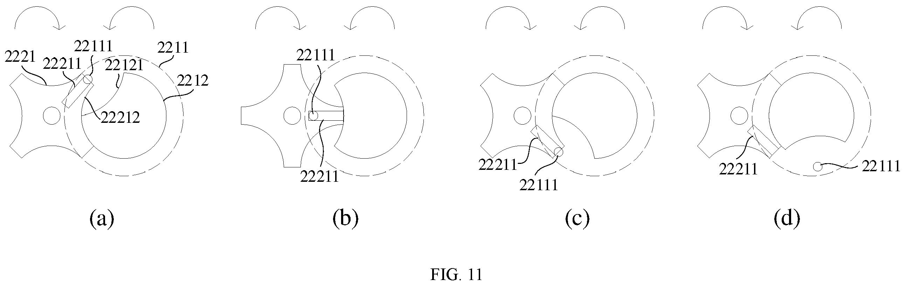

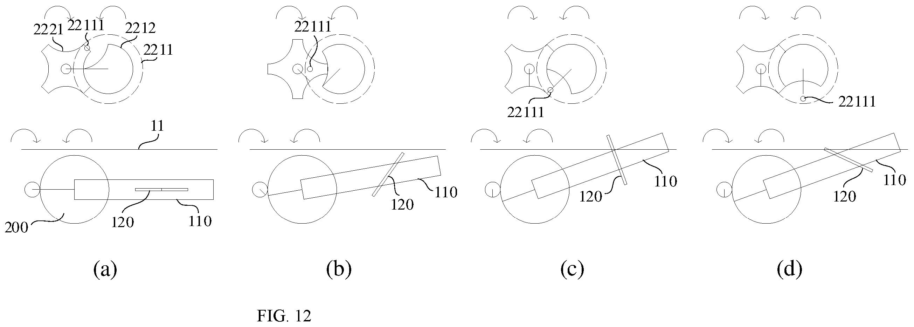

FIG. 11 is a schematic diagram of an action of the gear set provided in an embodiment of the present application. FIG. 12 is a schematic diagram of an action of the gear set cooperating with the air guiding structure provided by an embodiment of the present application.

As shown in FIG. 11 and FIG. 12, the figures show the action of the driving assembly 200 driving the adjusting assembly 100 to move when the air supply angle θ is greater than the limit deflection angle α of the air guiding vane 120.

Referring to (a) in FIG. 11 and (a) in FIG. 12, when the transmission rod 22111 on the driving wheel 2211 is exactly located at the notch of the transmission groove 22211 on the first transmission wheel 2221, the adjusting assembly 100 is in an initial state. At this time, both the carrier 110 and the air guiding vane 120 are in an initial position, a length direction of the carrier 110 may be parallel to a length direction of the air outlet 11, and the air guiding vane 120 may be parallel to the length direction of the carrier 110.

Referring to (b) in FIG. 11 and (b) in FIG. 12, the driving motor 210 drives the drivingwheel 2211 to rotate, and when the transmission rod 22111 on the driving wheel 2211 slides along the transmission groove 22211 on the first transmission wheel 2221 to a bottom of the transmission groove 22211, the air guiding vane 120 rotate around its own rotating shaft by a certain angle on the carrier 110. At the same time, the carrier 110 swings around its own rotating shaft by a certain angle relative to the length direction of the air outlet 11. At this time, the carrier 110 may partially extend out of the air outlet 11.

Referring to (c) in FIG. 11 and (c) in FIG. 12, when the transmission rod 22111 on the driving wheel 2211 slides from the bottom of the transmission groove 22211 on the first transmission wheel 2221 to the notch of the transmission groove 22211, the air guiding vane 120 continues to rotate around its own rotating shaft by a certain angle, and the included angle between the air guiding vanes 120 and the length direction of the carrier 110 increases. At the same time, the carrier 110 continues to swing around its own transmission shaft by a certain angle, and the included angle between the carrier 110 and the length direction of the air outlet 11 increases. At this time, the carrier 110 swings to a limit deflection position, and the carrier 110 reaches a limit deflection angle. More part of the carrier 110 extends out of the air outlet 11.

Referring to (d) in FIG. 11 and (d) in FIG. 12, after the transmission rod 22111 on the driving wheel 2211 disengages from the transmission groove 22211 on the first transmission wheel 2221, as the driving motor 210 continues to operate, the transmission rod 22111 on the driving wheel 2211 moves away from the first transmission groove 22211. At this time, the carrier 110 stays at a limit deflection position and no longer rotates. The air guiding vane 120 continue to rotate around its own rotating shaft, and the included angle between the air guiding vane 120 and the length direction of the carrier 110 increases.

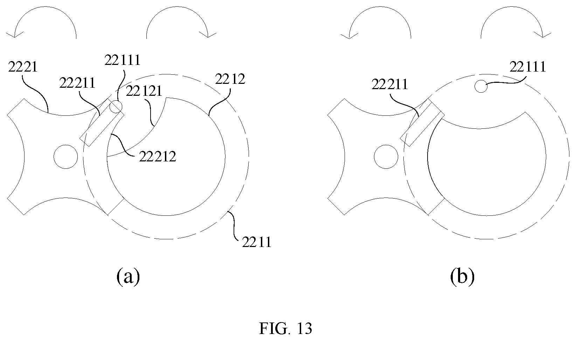

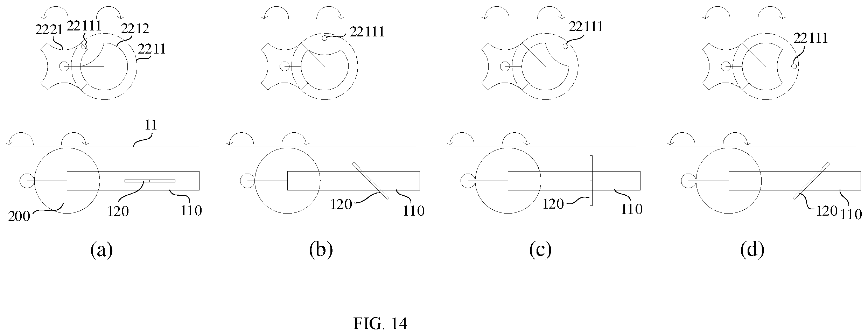

FIG. 13 is a schematic diagram of another action of the gear set provided in an embodiment of the present application. FIG. 14 is a schematic diagram of another action of the gear set cooperating with an air guiding structure provided by an embodiment of the present application.

Referring to FIG. 13, the figure shows the action of the gear set 220a when the air supply angle θ is less than the limit deflection angle α of the air guiding vanes 120. At this time, the driving assembly 200 only needs to drive the air guiding vanes 120 to rotate, and the carrier 110 can remain stationary at its initial position.

Referring to (a) in FIG. 13 and (a) in FIG. 14, when the transmission rod 22111 on the driving wheel 2211 is exactly located at the notch of the transmission groove 22211 on the first transmission wheel 2221, the adjusting assembly 100 is in an initial state. At this time, both the carrier 110 and the air guiding vane 120 are in their initial position, the length direction of the carrier 110 may be parallel to the length direction of the air outlet 11, and the air guiding vane 120 may be parallel to the length direction of the carrier 110.

Referring to (b) in FIG. 13 and (b) in FIG. 14, the driving motor 210 drives the driving wheel 2211 to rotate in reverse direction, the transmission rod 22111 on the driving wheel 2211 moves in a direction away from the first transmission wheel 2221, and the air guiding vane 120 rotate around its own rotating shaft by a certain angle on the carrier 110. At this time, the air guiding vane 120 may deflect toward one end of the length direction of the air outlet 11, and this end of the air outlet 11 may correspond to the adjusting assembly 100 where the air guiding vane 120 is located. Taking the adjusting assembly 100 located on a left side of the air outlet 11 as an example, the air guiding vane 120 may deflect toward the left side of the air outlet 11.

Referring to (c) in FIG. 14, the driving motor 210 continues to drive the driving wheel 2211 to rotate in reverse direction, the transmission rod 22111 on the driving wheel 2211 continues to move in the direction away from the first transmission wheel 2221, and the air guiding vane 120 continue to rotate around its own rotating shaft by a certain angle on the carrier 110. At this time, the air guiding vane 120 may be perpendicular to the length direction of the carrier 110, and the air guiding vane 120 remains extending vertically toward the air outlet 11.

Referring to (d) in FIG. 14, the driving motor 210 continues to drive the driving wheel 2211 to rotate in reverse direction, the transmission rod 22111 on the driving wheel 2211 continues to move in the direction away from the first transmission wheel 2221, and the air guiding vane 120 continue to rotate around its own rotating shaft by a certain angle on the carrier 110. At this time, the air guiding vane 120 may deflect toward the other end of the length direction of the air outlet 11, and this end of the air outlet 11 may be the end away from the adjusting assembly 100 where the air guiding vane 120 is located. Taking the adjusting assembly 100 located on the left side of the air outlet 11 as an example, the air guiding vane 120 may deflect toward a right side of the air outlet 11.

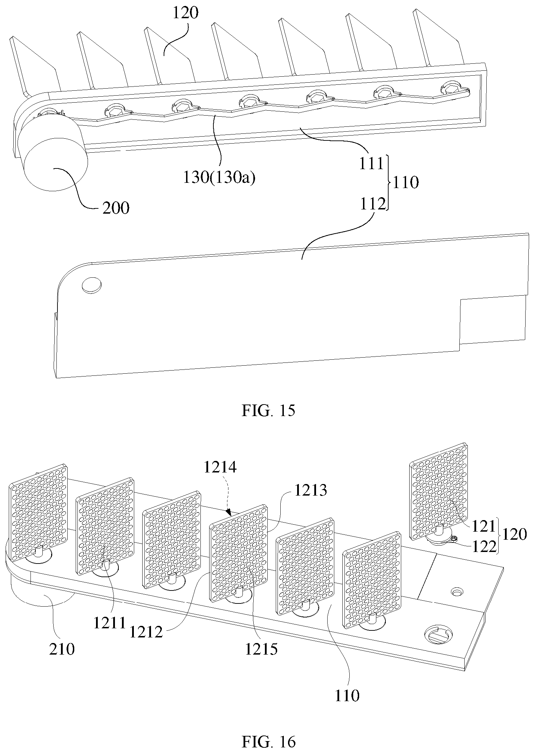

FIG. 15 is an exploded structural diagram of the adjusting assembly provided by an embodiment of the present application. Referring to FIG. 15, regarding how the driving assembly 200 drives all the air guiding vanes 120 on the carrier 110 to swing, as an implementation, the adjusting assembly 100 may further include a linkage component 130, and all the air guiding vanes 120 are connected to the linkage component 130. When the driving assembly 200 operates, it can drive the linkage component 130 to move. When the linkage component 130 moves, it can drive all the air guiding vanes 120 to move synchronously, so as to drive all the air guiding vanes 120 to swing synchronously through the linkage component 130.

Where the driving assembly 200 may be connected to one of all the air guiding vanes 120; for example, the driving assembly 200 is connected to the air guiding vane 120 located at an end of the carrier 110. The driving assembly 200 drives this air guiding vane 120 to rotate, and this air guiding vane 120 drives the linkage component 130 connected thereto to move. Further, the movement of the linkage component 130 drives all the air guiding vanes 120 to swing synchronously.

Alternatively, the driving assembly 200 may also be connected to the linkage component 130; for example, the driving assembly 200 is connected to the part of the linkage component 130 located between two air guiding vanes 120. The driving assembly 200 drives the linkage component 130 to move, and the linkage component 130 drives all the air guiding vanes 120 to swing synchronously.

Continuing to refer to FIG. 15, the linkage component 130 may be provided inside the carrier 110. In this way, the linkage component 130 can be easily connected to all the air guiding vanes 120. Moreover, the linkage component 130 is also shielded inside the carrier 110, making the appearance of the air guiding structure 20 more concise. Furthermore, the linkage component 130 does not occupy additional separate space, has no impact on the volume of the air guiding structure 20, and is conducive to miniaturization of the air guiding structure 20.

To mount the linkage component 130 inside the carrier 110 and facilitate the connection between the linkage component 130 and each air guiding vane 120, the carrier 110 may be divided into two parts: a panel 111 and a bottom plate 112. All the air guiding vanes 120 may be mounted on the panel 111, the driving assembly 200 may be mounted on the bottom plate 112, and the driving assembly 200 passes through the bottom plate 112 to connect with the air guiding vane 120 or the linkage component 130. The panel 111 and the bottom plate 112 together form an accommodating cavity, and the linkage component 130 is provided in the accommodating cavity.

As shown in FIG. 15, as an example, the linkage component 130 may be a connecting rod 130a, the connecting rod 130a may extend along an extending direction of the carrier 110 and is connected to all the air guiding vanes 120. The driving motor 210 may drive one of the air guiding vanes 120 to rotate, and this air guiding vane 120 drives the connecting rod 130a to reciprocate with small swing amplitude. Through the swing and reciprocating movement of the connecting rod 130a, all the air guiding vanes 120 are driven to swing. Or, the output shaft of the driving motor 210 is connected to the connecting rod 130a, and the rotation of the driving motor 210 drives the connecting rod 130a to reciprocate with the small swing amplitude, thereby driving all the air guiding vanes 120 to swing.

By providing the linkage component 130 as a connecting rod 130a, the structure of the linkage component 130 can be simplified, the processing technology of the linkage component 130 is simple, the production cost is low, and it is suitable for large-scale production and application. Moreover, the connecting rod 130a is a simple and reliable transmission structure, which can effectively convert the rotational movement of the driving motor 210 into the linear reciprocating swing of the connecting rod 130a itself, helping to improve the reliability and durability of the adjusting assembly 100. Furthermore, geometric characteristics of the connecting rod 130a determine that it can provide precise motion control, and can drive the air guiding vane 120 to perform precise angle adjustment within a set range, so as to provide users with more precise air supply control.

As another example, the linkage component may be a rack (not shown), which may extend along the extending direction of the carrier 110. Each air guiding vane 120 includes a gear (not shown), which may be provided on the central axis of the air guiding vane 120, for example. The output shaft of the driving motor 201 in the first driving assembly 210 may also be connected to a gear (for example, the output shaft of the driving motor 201 is connected to the gear on one of the air guiding vanes 120). The driving motor 201 drives the rack to move along the extending direction of the carrier 110 through the gear, and the movement of the rack drives the gear on each air guiding vane 120 to rotate, thereby driving all the air guiding vanes 120 to rotate.

Compared with the connecting rod 130a, transmitting power through the meshing of the rack and the gear, since the rotation of the gear is not limited by the range of rotation angle, as long as the rack is sufficiently long and continues to move, the gear can be driven to rotate 360°. Thus, the gear can drive the air guiding vane 120 to achieve a range of rotation angle of 0°~360°, enabling full-range air sweeping. In addition, the rack adopts a liner motion mode, the transmission method is simpler, a motion trajectory is more precise, the reliability of driving the air guiding vane 120 to rotate is higher, and the rotation angle of the air guiding vane 120 can be controlled more precisely.

FIG. 16 an exploded structural diagram of yet another adjusting assembly provided by an embodiment of the present application. Referring to FIG. 16, the air guiding vane 120 includes a vane body 121, which is a main structure of the air guiding vane 120. An air guiding channel is formed between vane bodies 121 of adjacent air guiding vanes 120 to guide the air flow blown out from the air outlet 11. The first driving assembly 210 drives the air guiding vanes 120 to move to change the orientation of the vane bodies 121 of the air guiding vanes 120, thereby changing the air supply direction of the adjusting assembly 100.

A thickness of the vane body 121 may be between 2mm and 3mm. In this way, the vane body 121 has a certain thickness to meet processability requirements of the vane body 121 and ensure required structural strength of the vane body 121. At the same time, the thickness of the vane body 121 is small, the space occupied by the vane body 121 is small, and there is sufficient spacing between adjacent vanes, so that the air flow in the air duct can be smoothly guided out, avoiding affecting the air supply of the air handling device 1.

Exemplarily, the thickness of the vane body 121 may be 2.0mm, 2.1mm, 2.2mm, 2.3mm, 2.4mm, 2.5mm, 2.6mm, 2.7mm, 2.8mm, 2.9mm, 3.0mm, etc.

When the air guiding vane 120 is rotatably connected to the carrier 110, the air guiding vane 120 may further include a rotating shaft 122. The rotating shaft 122 is connected to the vane body 121. The rotating shaft 122 may be integrally formed on the vane body 121 to form an integrally formed air guiding vane 120. The rotating shaft 122 may be connected to the end of the vane body 121 facing the carrier 110, the rotating shaft 122 is rotatably connected to the carrier 110, and the vane body 121 rotates around the rotating shaft 122.

Exemplarily, the rotating shaft 122 may be located on the central axis of the vane body 121. In this way, the air guiding vane 120 has good force balance, and the air guiding vane 120 is more stable and reliable during rotation. In addition, widths of the vane body 121 on both sides of the central axis are consistent, which is more conducive to the layout and mount of the air guiding vanes 120. The spacing between adjacent vanes can be designed according to the width of the vane body 121, so that the air guiding vanes 120 are provided at a uniform interval. Furthermore, the air guiding vane 120 can also be better applied in 360° rotation scenarios. The air guiding vane 120 has the smallest movable range, and the required movable space of the air guiding vane 120 is also the smallest, which can reduce the space occupied by the air guiding structure 20 and is conducive to the miniaturization of the air handling device 1.

Exemplarily, the rotating shaft 122 may include a disc structure (not shown), and a mounting groove (not shown) may be provided on the carrier 110. The disc structure may rotate in the mounting groove to achieve the rotation of the air guiding vane 120 on the carrier 110. Where the disc structure may be completely accommodated in the mounting groove. For example, the disc structure is flush with a front surface of the carrier 110 (the surface of the carrier 110 facing the vane body 121). In this way, the disc structure does not protrude from the surface of the carrier 110, which helps to reduce wind resistance of the adjusting assembly 100. In addition, the adjusting assembly 100 has better flatness and a more attractive appearance.

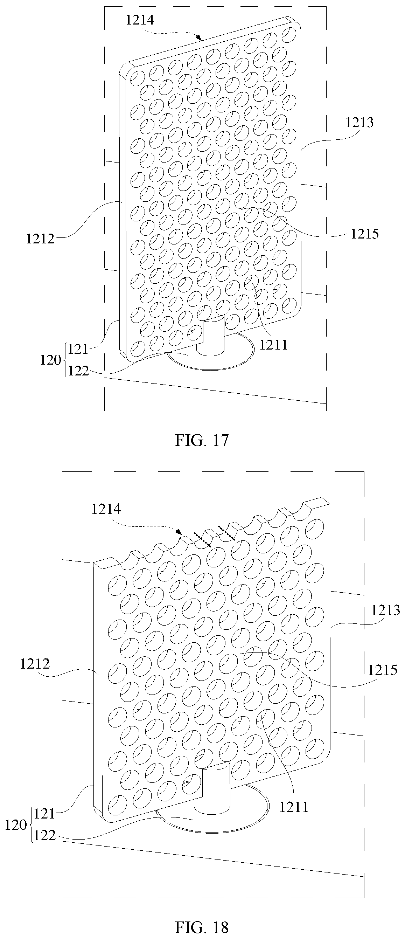

FIG. 17 a schematic structural diagram of the air guiding vane in the adjusting assembly in FIG. 16. FIG. 17 shows a structure of a part where one of the air guiding vanes 120 of the adjusting assembly 100 is located.

Referring to FIG. 17, several air outlet holes 1211 may be arranged on the vane body 121 of the air guiding vane 120, and the air outlet holes 1211 penetrate through two side surfaces of the vane body 121 in the thickness direction of the vane body 121. By opening several air outlet holes 1211 on the vane body 121, when the air handling device 1 is in the working state, the air flow blown out from the air duct can flow outward through the air outlet holes 1211 on the vane body 121.

Specifically, when the air guiding vane 120 is in an open state, there is an included angle between the air guiding vane 120 and the plane where the air outlet 11 is located, and an air guiding channel is formed between adjacent air guiding vanes 120. At this time, part of the air flow blown out from the air duct will flow outward along the air guiding channel, and another part can pass through the air outlet holes 1211 on the vane body 121 and flow outward. In this way, the air outlet holes 1211 on the vane body 121 are used to improve the air supply effect of the air handling device 1.

When the air handling device 1 supplies air outward through the adjusting assembly 100, in addition to a first air flow flowing outward along the air guiding channel, a second air flow flowing outward through the air outlet hole 1211 is also generated, and a flow direction of the second air flow is different from that of the first air flow. Under counteracting effect of the second air flow against the first air flow, a flow velocity of the first air flow can be reduced, avoiding strong wind blowing out from the air outlet 11, and making the air supply effect of the air handling device 1 softer, thereby improving usage comfort of the air handling device 1.

It should be noted that a diameter of the air outlet hole 1211 opened on the vane body 121 is very small, and the air flow in the air duct will preferentially flow outward through the air guiding channel between adjacent air guiding vanes 120. Thus, most of the air flow in the air duct will flow out through the air guiding channel between adjacent air guiding vanes 120, and only a small part of the air flow will flow out through the air outlet hole 1211. This small part of the air flow passing through the air outlet hole 1211 can play a good role in counteracting and mixing, reducing the air outflow velocity, and at the same time, it will not have a significant impact on the overall air supply direction and air supply zone of the adjusting assembly 100, and can ensure air supply adjusting effect of the adjusting assembly 100.

When the air guiding vane 120 is in a closed state, the air guiding vane 120 is generally parallel to the plane where the air outlet 11 is located, and the air guiding vanes 120 of the adjusting assembly 100 may be located on the same straight line, with only a small mounting gap between adjacent air guiding vanes 120. At this time, the air flow blown out from the air duct basically flows outward through the air outlet holes 1211 on the vane body 121. Due to the small dismeter of the air outlet hole 1211 and the limited opening area of the vane body 121, the flow rate of the air flow flowing out from the air outlet holes 1211 of each air guiding vane 120 is small, and the air supply volume and air velocity of the air handling device 1 are low.

Exemplarily, when the air handling device 1 performs heating, the air guiding vanes 120 can be in a closed state, and hot air is only delivered outward through the air outlet holes 1211 on each air guiding vane 120. Since the flow velocity of the hot air is low, wind resistance of the vane body 121 to the hot air is small, and the hot air can be stably output outward through the air outlet holes 1211 on the vane body 121. In addition, only outputting hot air through the air outlet holes 1211 on the vane body 121 can limit the flow rate of the hot air, maintain the indoor space at a suitable temperature, and reduce the energy consumption of the air handling device 1.

The several air outlet holes 1211 may be evenly arranged on the surface of the vane body 121. In this way, it can be ensured that the vane plate has a sufficient opening area, so that the second air flow flowing out through the air outlet holes 1211 has sufficient air volume, ensuring that the second air flow can effectively reduce the flow velocity of the first air flow and achieve softening of the air supply of the air handling device 1. In addition, since the air outlet holes 1211 are evenly arranged in each area of the vane body 121, the pressure exerted by the second air flow on the vane body 121 is evenly distributed on the vane body 121, so that force uniformity of the vane body 121 is good, and the reliability and service life of the vane body 121 can be improved.

Exemplarily, the air outlet holes 1211 may be arranged in an array on the surface of the vane body 121. Along a height direction of the vane body 121 (the height direction of the vane body 121 is, for example, the width direction of the air outlet holes 1211), a plurality of rows of air outlet holes 1211 are arranged in sequence, and each row of air outlet holes 1211 includes a plurality of air outlet holes 1211 arranged in sequence along the width direction of the vane body 121. Adjacent two rows of air outlet holes 1211 may be arranged in a staggered manner, where each air outlet hole 1211 in one row may be correspondingly located between two adjacent air outlet holes 1211 in another row.

The area occupied by the air outlet holes 1211 on the vane body 121 may be 45%-85% of a total area of the vane body 121, that is to say, an opening rate of the vane body 121 may be 45%-85%. In this way, the vane body 121 has a sufficient opening area, which can ensure the flow area of the vane body 121 itself, and the air flow flowing outward through the air outlet holes 1211 of the vane body 121 reaches a certain flow rate, which can achieve an effective air supply softening effect.

Exemplarily, the opening rate of the vane body 121 may be between 50% and 60%. Thus, more than half of the area of the vane body 121 is occupied by the air outlet holes 1211, and the air supply flow rate through the air outlet holes 1211 of the vane body 121 is sufficient. Moreover, this also avoids too large opening rate of the vane body 121, can meet the opening processing requirements of the vane body 121 and ensures the structural strength and reliability of the vane body 121.

FIG. 18 is a cross-sectional view of the air guiding vane in FIG. 17. Referring to FIG. 18, the air guiding vane 120 is cut off in the middle area of a row of air outlet holes 1211 along the width direction of the air guiding vane 120. On the basis of opening the air outlet holes 1211 on the vane body 121, the present embodiment also designs the extending direction of the air outlet holes 1211. The air outlet holes 1211 do not extend along the thickness direction of the vane body 121, instead, the extending direction of the air outlet hole 1211 is designed to be inclined.

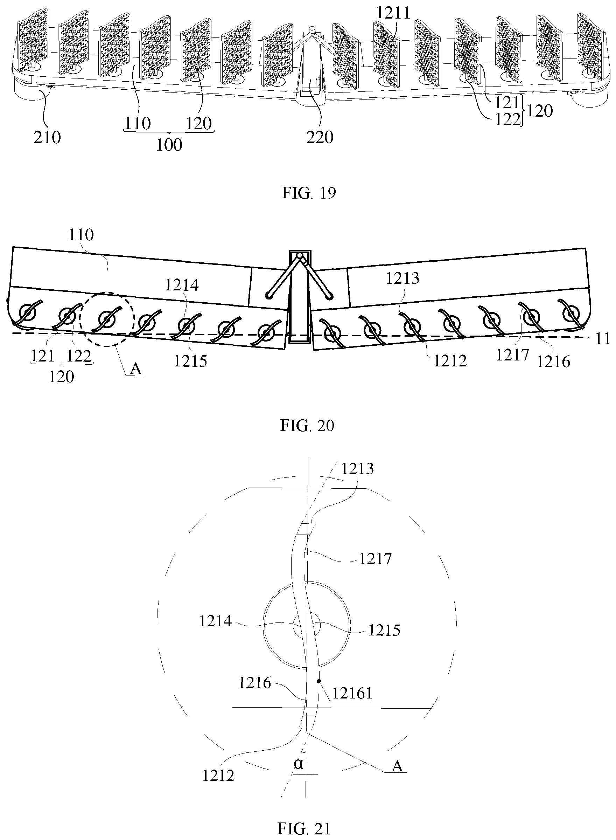

FIG. 20 is a front view of the air guiding structure in FIG. 3. FIG. 21 is a partial enlarged diagram of the air guiding vane at position A in FIG. 20 in a vertical state. As shown in FIG. 20 and FIG. 21, in the present embodiment, a shape of the air guiding vanes 120 in the adjusting assembly 100 is designed. The air supply direction is further adjusted through the air guiding vanes 120, the flexibility of the adjusting assembly 100 in adjusting the air supply zone is enhanced, and thus the air supply coverage area of the air guiding structure 20 is further expanded.

For convenience of description, in the present embodiment, opposite sides of the vane body 121 of the air guiding vane 120 are defined as a first air guiding side 1212 and a second air guiding side 1213, respectively. The first air guiding side 1212 and the second air guiding side 1213 are respectively located on both sides of the central axis of the vane body 121. When the air handling device 1 is in a working state and the air guiding vane 120 is in the state of opening the air outlet 11, the first air guiding side 1212 of the vane body 121 is located at the outer side of the air outlet 11, and the second air guiding side 1213 of the vane body is located at the inner side of the air outlet 11.

In addition, in the present embodiment, the two side surfaces of the vane body 121 in its thickness direction are defined as a first surface 1214 and a second surface 1215, respectively. When the air guiding vanes 120 are in an open state and deflect obliquely to the same side of the air outlet 11, the first surface 1214 of the vane body 121 faces an inner side of the air outlet 11, and the second surface 1215 of the vane body 121 faces an outer side of the air outlet 11 (see FIG. 3).

In addition, in the present embodiment, it defines a datum plane A of the vane body (see FIG. 21). The datum plane A is an orthographic projection plane of the vane body 121. The orthographic projection plane is a projection plane formed by performing orthographic projection on the vane body 121. Moreover, the datum plane A of the vane body 121 includes the central axis of the vane body 121, or in other words, the central axis of the vane body 121 passes through the datum plane A.

It can be understood that taking the vane body 121, which is a flat plate, shown in FIG. 17 and FIG. 18 as an example, the first surface 1214 and the second surface 1215 of the vane body 121 are both flat surfaces, and the thickness of the vane body 121 is uniform. At this time, a central plane of the vane body 121 in its thickness direction is the datum plane A, and both the first surface 1214 and the second surface 1215 of the vane body 121 are parallel to the datum plane A.

Taking the air guiding vane 120 close to the left side of the air outlet 11 in the length direction of the air outlet 11 as an example, when the air guiding vane 120 is in an open state and deflects obliquely to the left side of the air outlet 11, the air supply angle of the air guiding vane 120 deflects to the left side of the air outlet 11. At this time, the first air guiding side 1212 of the vane body 121 faces the outer side of the air outlet 11, the second air guiding side 1213 of the vane body 121 faces the inner side of the air outlet 11, the first surface 1214 of the vane body 121 faces the inner side of the air outlet 11, and the second surface 1215 of the vane body 121 faces the outer side of the air outlet 11.

In the present embodiment, from the first surface 1214 of the vane body 121 to the second surface 1215 of the vane body 121, the air outlet holes 1211 may be inclined toward a side where the first air guiding side 1212 of the vane body 121 is located. That is to say, the central axes of the air outlet holes 1211 extend obliquely toward the first air guiding side 1212, an included angle between the central axes of the air outlet holes 1211 and the datum plane A of the vane body 121 on a side where the first air guiding side 1212 is located is less than 90°, and an included angle between the central axis of the air outlet hole 1211 and the datum plane A of the vane body 121 on a side where the second air guiding side 1213 is located is greater than 90°.

In this way, when the air guiding vane 120 is in an open state, in the air supply direction of the adjusting assembly 100, an included angle between the extending direction of the air outlet hole 1211 and a side of the vane body 121 close to the outside of the air outlet 11 is an acute angle, and the air outflow direction of the air outlet hole 1211 tends to align with the air guiding direction of the vane body 121. A direction difference between a flow direction of the first air flow flowing outward along the air guiding channel between adjacent air guiding vanes 120 and a flow direction of the second air flow flowing outward through the air outlet hole 1211 is less than 90°.

When the air guiding vanes 120 deflect to the same side of the air outlet 11, and the first air flow flowing out from the air guiding channel between adjacent air guiding vanes 120 deflects to the same side of the air outlet 11, the second air flow flowing out from the air outlet hole 1211 of the vane body 121 does not obviously deflect to the same side of the air outlet 11, but the second air flow also does not obviously deflect to the other side of the air outlet 11. At the same time, the flow rate of the second air flow is significantly less than that of the first air flow. Therefore, the influence of the second air flow on the overall air supply direction of the adjusting assembly 100 is small, which can ensure the adjusting accuracy of the adjusting assembly 100 for the air supply direction and the air supply zone.

Taking the air guiding vane 120 close to the left side of the air outlet 11 as an example, when the air guiding vane 120 deflects to the left side of the air outlet 11, the first air flow flowing out from the air guiding channel between adjacent air guiding vanes 120 deflects to the left side of the air outlet 11, and the flow direction of the second air flow flowing out from the air outlet holes 1211 of the vane body 121 itself may be roughly toward the directly front of the air outlet 11, or the flow direction of the second air flow may also deflect slightly to the left side of the air outlet 11.

Thus, from the first surface 1214 to the second surface 1215 of the vane body 121, by inclining the air outlet holes 1211 on the vane body 121 toward the first air guiding side 1212, the second air flow flowing out from the air outlet holes 1211 can not only counteract the first air flow flowing out along the air guiding channel, playing a role in making the air supply of the adjusting assembly 100 softer, but also can reduce the interference of the second air flow on the overall air supply direction of the adjusting assembly 100, ensuring the air supply adjusting accuracy of the adjusting assembly 100.

Specifically, the included angle between the extending direction of the air outlet holes 1211 on the vane body 121 and the datum plane A ranges from 30° to 60°.

Taking the deflection angle of the vane body 121 deflecting to the same side of the air outlet 11 as 45° as a reference, the included angle between the vane body 121 and a vertical direction (the direction perpendicular to the plane where the air outlet 11 is located) of the air outlet 11 is 45°, and the included angle between the vane body 121 and the plane direction of the air outlet 11 is also 45°. At this time, a deflection degree of the vane body 121 is moderate, and the air supply angle of the adjusting assembly 100 deflects obviously to the same side of the air outlet 11. It is more appropriate to judge whether the air outflow direction of the air outlet hole 1211 is suitable based on this deflection angle.

Taking the air guiding vane 120 close to the left side of the air outlet 11 as an example, when the included angle between the extending direction of the air outlet holes 1211 and the datum plane A is 60°, the deflection angle of the vane body 121 deflecting to the left side of the air outlet 11 is 45°, then the air flow blown out by the air outlet holes 1211 deflects 15 degrees to the right side of the air outlet holes 1211. When the included angle between the extending direction of the air outlet holes 1211 and the datum plane A is 30°, the deflection angle of the vane body 121 deflecting to the left side of the air outlet 11 is 45°, then the air flow blown out by the air outlet holes 1211 deflects 15 degrees to the left side of the air outlet holes 1211.

It can be seen that the smaller the included angle between the extending direction of the air outlet holes 1211 and the datum plane A, the closer the air outflow direction of the air outlet holes 1211 is to the overall air supply direction of the adjusting assembly 100. Moreover, when the deflection angle of the vane body 121 toward the same side of the air outlet 11 is greater than 45°, it indicates that the adjusting assembly 100 has an obvious effect of guiding air to the same side of the air outlet 11. Therefore, by designing the included angle between the extending direction of the air outlet holes 1211 and the datum plane A to be less than or equal to 60°, when the adjusting assembly 100 guides air to the same side of the air outlet 11, the air flow blown out by the air outlet holes 1211 will not obviously face the other side of the air outlet 11, and the overall adjusting effect of the adjusting assembly 100 is good.

Exemplarily, the included angle between the extending direction of the air outlet holes 1211 on the vane body 121 and the datum plane A ranges from 40° to 50°. Continuing to take the air guiding vane 120 close to the left side of the air outlet 11 as an example, when the included angle between the extending direction of the air outlet holes 1211 and the datum plane A is 50°, the deflection angle of the vane body 121 deflecting to the left side of the air outlet 11 is 45°, then the second air flow blown out by the air outlet holes 1211 deflects 5 degrees to the right side of the air outlet holes 1211. When the included angle between the extending direction of the air outlet holes 1211 and the datum plane A is 30°, the deflection angle of the vane body 121 deflecting to the left side of the air outlet 11 is 45°, then the second air flow blown out by the air outlet holes 1211 deflects 15 degrees to the left side of the air outlet holes 1211.

In this way, when the air supply angle of the adjusting assembly 100 deflects obviously to the same side of the air outlet 11, the second air flow blown out from the air outlet holes 1211 of the vane body 121 is roughly blown toward the front of the air outlet 11, or the second air flow blown out from the air outlet holes 1211 also inclines toward the same side of the air outlet 11. In this way, the influence of the air outlet holes 1211 on the overall air supply direction of the adjusting assembly 100 can be avoided, and also, the inclination degree of the air outlet holes 1211 will not be too large, which is convenient for processing the air outlet holes 1211 on the vane body 121. In addition, the space occupied by the air outlet holes 1211 in the plane direction of the vane body 121 is moderate, and the sufficient number of air outlet holes 1211 can be processed on the vane body 121 to ensure the air supply volume of the air outlet holes 1211 of the vane body 121.

For example, the included angle between the extending direction of the air outlet holes 1211 on the vane body 121 and the datum plane A is 45°. Continuing to take the air guiding vane 120 close to the left side of the air outlet 11 as an example, when the included angle between the extending direction of the air outlet holes 1211 and the datum plane A is 45°, the deflection angle of the vane body 121 deflecting to the left side of the air outlet 11 is 45°, then the included angle between the second air flow blown out by the air outlet holes 1211 and the vertical direction of the air outlet 11 is 0°, and the second air flow is blown toward the front of the air outlet 11. In this way, when the air supply angle of the adjusting assembly 100 deflects obviously to the same side of the air outlet 11, the air flow blown out by the air outlet holes 1211 also inclines toward the same side of the air outlet 11.

As for the shape of the air outlet holes 1211 on the vane body 121, the present embodiment has no specific limitations on it. The air outlet holes 1211 can be in a relatively regular shape to avoid stress concentration. For example, the cross-sectional shape of the air outlet holes 1211 can be a circular, an elliptical or a regular polygon. When the cross-sectional shape of the air outlet holes 1211 is a regular polygon, the cross-sectional shape of the air outlet holes 1211 is, for example, a regular pentagon, a regular hexagon, a regular octagon, etc.

An appropriate size of the air outlet holes 1211 can be processed on the vane body 121 according to the size of the vane body 121. Taking the air outlet holes 1211 as a circular hole as an example, a diameter of the air outlet holes 1211 can be between 4mm and 9mm. In this way, the air outlet holes 1211 have a sufficient cross-sectional area, meet the air supply demand, and ensure that the air outlet holes 1211 on the vane body 121 has a certain air supply volume, and also, the cross-sectional area of the air outlet hole 1211 will not be too large, and the sufficient number of air outlet holes 1211 can be opened on the vane body 121 to avoid the air outlet holes 1211 affecting the structural strength and reliability of the vane body 121.

Exemplarily, the diameter of the air outlet holes 1211 can be 4.5mm, 5.0mm, 5.5mm, 6.0mm, 6.5mm, 7.0mm, 7.5mm, 8.0mm, 8.5mm, etc.

FIG. 19 is a schematic structural diagram of another air guiding structure provided by an embodiment of the present application. FIG. 20 is a front view of the air guiding structure in FIG. 19.

Referring to FIG. 19 and FIG. 20, in the present embodiment, the shape of the air guiding vane 120 in the adjusting assembly 100 is designed. The air supply direction is further adjusted through the air guiding vane 120, the flexibility of the adjusting assembly 100 in adjusting the air supply zone is enhanced, and thus the air supply coverage area of the air guiding structure 20 is further expanded.

Specifically, in the present embodiment, the vane bodies 121 of at least part of the air guiding vanes 120 in the adjusting assembly 100 are set to a curved surface shape. For these curved vane bodies 121, taking the central axes of the vane bodies 121 as a dividing line, a side of the vane bodies 121 at their central axes is a first curved portion 1216.

FIG. 21 is a partial enlarged diagram of the air guiding vane in FIG. 20 in a vertical state. Referring to FIG. 21, in some implementations, when the air guiding vane 120 is in an open state, the first curved portion 1216 in the vane body 121 may be located on the outer side the air outlet. At this time, the first air guiding side 1212 is a side of the first curved portion 1216 away from the central axis of the vane body 121, and the first curved portion 1216 makes the first air guiding side 1212 deflect to a side of the vane body 121. Taking the datum plane A of the vane body 121 as a reference, the extending direction of the first air guiding side 1212 deviates from the datum plane A, and there is an included angle α between the extension line of the first air guiding side 1212 and the datum plane A.

When the air handling device 1 is in a working state, an air guiding channel is formed between the vane bodies 121 of adjacent air guiding vanes 120, and the air flow at the air outlet 11 is blown to the outside along the air guiding channel. Since a side of the vane body 121 is the first curved portion 1216 that can cause the air flow passing through the air guiding channel to generate the Coanda effect and change the flow direction of the air flow, the air supply direction of the adjusting assembly 100 is changed, and the air supply zone of the air guiding structure 20 is adjusted.

The so-called Coanda effect, also known as wall attachment effect, is a phenomenon in fluid mechanics. Specifically, it refers to that during the flow process, the fluid (water flow or air flow) will deviate from its original flow direction and instead flow along a surface of a protruding object. When there is surface friction (or fluid viscosity) between the fluid and the surface of the object it flows through, the fluid will flow along the surface of the object as long as the curvature is not large.

Thus, when the air flow in the air duct flows toward the air outlet 11, it flows through a surface of the first curved portion 1216, and friction occurs between the air flow and the surface of the first curved portion 1216. The flow direction of the air flow can be changed, so that the air flow flows along the surface of the first curved portion 1216. Finally, when the air flow is blown to the outside through the vane body 121, it can flow along the extending direction of the first air guiding side 1212. That is to say, the extending direction of the first air guiding side 1212 can be regarded as the air supply direction of the air guiding vane 120.

In this way, the flow direction of the air flow blown out from the air outlet 11 is guided by the first air guiding side 1212, so that the air flow flows along the extending direction of the first air guiding side 1212. There is an included angle between the extension line of the first air guiding side 1212 and the datum plane A where the vane body 121 is located, which is equivalent to changing the flow direction of the air flow that would otherwise flow along the extending direction of the datum plane A. Furthermore, the air supply angle of the adjusting assembly 100 can be changed, making the adjustment of the air supply zone by the air guiding structure 20 more flexible and further expanding the air supply coverage area of the air handling device 1.

When the air handling device 1 is in a working state, since the first air guiding side 1212 is a side where the air flow flows out of the air guiding channel, the first curved portion 1216 in the vane body 121 can be located on the first air guiding side 1212 outside the air outlet 11. In this way, the air flow flows along the surface of the first curved portion 1216, and when the air flow is blown to the outside, it can flow along the extending direction of the first air guiding side 1212, thereby changing the air supply direction of the adjusting assembly 100.

Moreover, in order to expand the air supply zone of the adjusting assembly 100, the first curved portion 1216 can make the first air guiding side 1212 deflect to the same side of the air outlet 11. Referring to FIG. 21, taking the air guiding vane 120 in a vertical state as a reference, when the air guiding vane 120 is perpendicular to the plane where the air outlet 11 is located, the extension line of the first air guiding side 1212 can extend to the same side of the air outlet 11. Taking the air guiding vane 120 closer to the left side of the air outlet 11 in the length direction of the air outlet 11 as an example, the first air guiding side 1212 can deflect to the left side of the air outlet 11, and when the air guiding vane 120 is perpendicular to the plane where the air outlet 11 is located, the extension line of the first air guiding side 1212 can extend to the left side of the air outlet 11.

In order to make the adjusting assembly 100 have a large air supply coverage area, the air guiding vane 120 is usually made to guide air to the same side of the air outlet 11. For example, the air guiding vane 120 close to the left side of the air outlet 11 in the length direction of the air outlet 11 guides air to the left side of the air outlet 11, and the air guiding vane 120 close to the right side of the air outlet 11 in the length direction of the air outlet 11 guides air to the right side of the air outlet 11. By making the extension line of the first air guiding side 1212 extend to the same side of the air outlet 11, when the air guiding vane 120 guides air to the same side of the air outlet 11, the first air guiding side 1212 can further increase the air supply deflection angle of the air guiding vane 120. Thus, the air supply zone of the adjusting assembly 100 is expanded.

The aforementioned air guiding vane guiding air to the same side of the air outlet is explained with the following two examples: for the air guiding vane 120 close to the left side of the air outlet 11 in the length direction of the air outlet 11, when the air guiding vane 120 guides air to the left side of the air outlet 11, the first air guiding side 1212 can further deflect the air supply angle of the air guiding vane 120 to the left side of the air outlet 11; and for the air guiding vane 120 close to the right side of the air outlet 11 in the length direction of the air outlet 11, when the air guiding vane 120 guides air to the right side of the air outlet 11, the first air guiding side 1212 can further deflect the air supply angle of the air guiding vane 120 to the right side of the air outlet 11. Therefore, the air supply deflection angles of the air guiding structure 20 to the left and right sides of the air outlet 11 are increased, and the air supply zone and air supply coverage area of the air guiding structure 20 are expanded.

Of course, in some implementations, when the air handling device 1 is in a working state, the first curved portion 1216 in the vane body 121 can also be located on the inner side the air outlet 11. At this time, the second air guiding side 1213 is a side of the first curved portion 1216 away from the central axis of the vane body 121. Since the second air guiding side 1213 is a side where the air flow flows into the air guiding channel, the flow direction of the air flow can be changed when the air flow flows into the air guiding channel. After the air flow flows along the surface of the first curved portion 1216 in the air guiding channel, the flow direction of the air flow is changed and thus the flow direction of the air flow after flowing out from the air guiding vane 120 is also changed, thereby changing the air supply direction of the adjusting assembly 100.

At this time, in order to expand the air supply zone of the adjusting assembly 100, the first curved portion 1216 can also make the second air guiding side 1213 deflect to the same side of the air outlet 11. When the air guiding vane 120 is perpendicular to the plane where the air outlet 11 is located, the extension line of the second air guiding side 1213 can extend to the same side inside the air outlet 11. In this way, when the air guiding vane 120 needs to guide air to the same side of the air outlet 11, the extension line of the first air guiding side 1212 of the air guiding vane 120 is made perpendicular to the plane where the air outlet 11 is located, or the extension line of the first air guiding side 1212 of the air guiding vane 120 is made to deflect to the other side of the air outlet 11, so as to ensure that when the air flow flows outward from the air outlet 11, the overall flow is inclined to the same side of the air outlet 11.

Taking the air guiding vane 120 close to the left side of the air outlet 11 in the length direction of the air outlet 11 as an example, when the air guiding vane 120 guides air to the left side of the air outlet 11, the extension line of the second air guiding side 1213 of the air guiding vane 120 located inside the air outlet 11 can be perpendicular to the plane where the air outlet 11 is located, or the extension line of the second air guiding side 1213 of the air guiding vane 120 extends to the inner side of the air outlet 11 and deflects to the right side of the air outlet 11. In this way, the air guiding vane 120 is integrally deflected to the left side of the air outlet 11, and air can be guided to the left side of the air outlet 11.

In this way, taking the central line of the air outlet 11 in its length direction as the dividing line, when the air handling device 1 is working, the air guiding vane 120 located on the left side of the air outlet 11 can deflect to the left (for example, the air guiding vane 120 in the left adjusting assembly 100 of the two adjusting assemblies 100 deflect to the left), and through the air guiding effect of the first curved portion 1216, the air supply angle and air supply zone for supplying air to the left side of the air outlet 11 are expanded. At the same time, the air guiding vane 120 located on the right side of the air outlet 11 can deflect to the right (for example, the air guiding vane 120 in the right adjusting assembly 100 of the two adjusting assemblies 100 deflect to the right), and through the air guiding effect of the first curved portion 1216, the air supply angle and air supply zone for supplying air to the right side of the air outlet 11 are expanded. Therefore, the air supply coverage area of the air handling device 1 is significantly expanded.

Alternatively, the air guiding vanes 120 located on both sides of the air outlet 11 can all deflect to the left (for example, the air guiding vanes 120 in two adjusting assemblies 100 all deflect to the left). At this time, since the deflection angles of all the air guiding vanes 120 on the left side of the air outlet deflecting to the left side of the air outlet are increased. Moreover, the carrier 110 in the right adjusting assembly 100 can also be made to deflect to the left, to drive the air guiding vanes 120 thereon to deflect to the left by an increased angle. Even, the carrier 110 in the left adjusting assembly 100 can also be deflected to the left, to drive the air guiding vanes 120 thereon to deflect to the left side by an increased angle. Therefore, an angle of the air handling device 1 guiding air to the left side is obviously increased.

Similarly, the air guiding vanes 120 located on both sides of the air outlet 11 can all deflect to the right (for example, the air guiding vanes 120 in the two adjusting assemblies 100 all deflect to the right). At this time, since the deflection angles of all the air guiding vanes 120 on the right side of the air outlet deflecting to the right side of the air outlet are increased, and the carrier 110 in the left adjusting assembly 100 can be deflected to the right and drive the air guiding vanes 120 thereon to deflect to the right by an increased angle, and even, the carrier 110 in the right adjusting assembly 100 can be deflected to the right and drive the air guiding vanes 120 thereon to deflect to the right side by an increased angle, an angle of the air handling device 1 guiding air to the right side is obviously increased.

The following descriptions are all based on an example where the first curved portion 1216 in the vane body 121 of the air guiding vane 120 is located on the outer side of the air outlet 11 and the first air guiding side 1212 deflects to the same side of the air outlet 11 when the air handling device 1 is in a working state.

Specifically, taking one air guiding vane 120 close to the left side of the air outlet 11 in the length direction of the air outlet 11 as an example, if the included angle between the extension line of the first air guiding side 1212 of this air guiding vane 120 and its datum plane A is 30°, when this air guiding vane 120 is perpendicular to the plane where the air outlet 11 is located, the included angle between the extension line of the first air guiding side 1212 and the vertical line of the air outlet 11 (the line perpendicular to the plane where the air outlet 11 is located) is 30°, and then the air supply angle of the air guiding vane 120 can be deflected 30° to the left. When the air guiding vane 120 deflects 15° to the left, the included angle between the extension line of the first air guiding side 1212 and the vertical line of the air outlet 11 is 45°, and then the air supply angle of the air guiding vane 120 can be deflected 45° to the left.

In this way, when the air guiding vane 120 guides air to the same side of the air outlet 11, the vane body 121 of the air guiding vane 120 deflects by a certain angle to the same side of the air outlet 11, and there is an included angle between the first air guiding side 1212 of the vane body 121 and the datum plane A, so that the first air guiding side 1212 may deflect by an increased angle to the same side of the air outlet 11. The air supply angle of the vane body 121 is increased, the air supply zone of the adjusting assembly 100 is larger, and the air supply coverage area is wider.

At the same time, on the basis that the air supply angle of the air guiding vane 120 is fixed, the deflection angle of the vane body 121 is a required air supply angle minus the included angle between the first air guiding side 1212 of the vane body 121 and the datum plane A, resulting in a smaller required deflection angle of the vane body 121. In this way, a rotation angle of the vane body 121 driven by the drive motor 201 is smaller, the energy consumption of the drive motor 201 is less, which is conducive to saving the energy consumption of the adjusting assembly 100 and reducing the overall energy consumption of the air handling device 1.

Continuing to refer to FIG. 21, in some implementations, on the basis of designing one side of the vane body 121 as the first curved portion 1216, the other side of the vane body 121 can be designed as a second curved portion 1217. That is to say, both sides of the central axis of the vane body 121 are designed as curved portions. Where, a side of the second curved portion 1217 away from the central axis of the vane body 121 is the second air guiding side 1213 of the vane body 121. The extending direction of the second air guiding side 1213 also deviates from the datum plane A, and there is an included angle between the extension line of the second air guiding side 1213 and the datum plane A.

Taking the air guiding vane 120 in a vertical state as a reference, the air guiding vane 120 is perpendicular to the plane where the air outlet 11 is located, the first air guiding side 1212 is located on the outer side the air outlet 11, and the extension line of the first air guiding side 1212 extends to the same side of the air outlet 11; and the second air guiding side 1213 is located on the inner side the air outlet 11, and the extension line of the second air guiding side 1213 extends to an opposite side of the air outlet 11. Taking the air guiding vane 120 close to the left side of the air outlet 11 as an example, when the air guiding vane 120 is perpendicular to the plane where the air outlet 11 is located, the extension line of the first air guiding side 1212 located outside the air outlet 11 can extend to the left side of the air outlet 11, and the extension line of the second air guiding side 1213 located inside the air outlet 11 can extend to the right side of the air outlet 11.

In this way, for the air guiding vane 120 capable of 360° rotation, when the air guiding vane 120 rotates until the second air guiding side 1213 of the vane body 121 is located outside the air outlet 11, similarly to when the first air guiding side 1212 is located outside the air outlet 11, the second air guiding side 1213 also deflects to the left side of the air outlet 11. In this way, the air guiding vane 120 can also rotate until the second air guiding side 1213 is located outside the air outlet 11, and the air guiding vane 120 uses the second air guiding side 1213 to guide the air flow blown out from the air outlet 11, and the air supply deflection angle of the air guiding vane 120 is increased through the second air guiding side 1213.

When the air handling device 1 is working, the first air guiding side 1212 of the air guiding vane 120 can be oriented to the outside of the air outlet 11, or the second air guiding side 1213 of the air guiding vane 120 can be oriented to the outside of the air outlet 11. The air guiding vane 120 can not only use the first air guiding side 1212 to increase the air supply deflection angle, but also use the second air guiding side 1213 to increase the air supply deflection angle. In this way, there is no limitation on the rotation angle of the air guiding vane 120, the control of the air guiding vane 120 is more flexible, and the operation mode is simpler. Moreover, when the air guiding vane 120 is mounted, there is no need to deliberately distinguish between the first air guiding side 1212 and the second air guiding side 1213 of the air guiding vane 120, and a positioning requirement for the air guiding vane 120 is weak, which is convenient for the mount of the air guiding vane 120, can improve assembly efficiency of the air guiding vane 120, and reduce the probability of mounting failure of the air guiding vane 120.

Exemplarily, a curved shape of the second curved portion 1217 can be completely consistent with a curved shape of the first curved portion 1216, and the vane body 121 of the air guiding vane 120 is a centrally symmetric structure. When the rotating shaft 122 of the air guiding vane 120 is located on the central axis of the vane body 121, the air guiding vane 120 is an overall centrally symmetric structure.

In this way, whether the first air guiding side 1212 is located on the outer side the air outlet 11 or the second air guiding side 1213 is located on the outer side the air outlet 11, when the vane body 121 deflects by a certain angle, the air supply deflection angle of the air guiding vane 120 is the same, which can make the air guiding vane 120 have the same air supply adjusting effect. Moreover, the air guiding vane 120 has good structural symmetry, balanced force distribution, better stability and higher reliability. In addition, due to the symmetric structure of the air guiding vane 120, the operability of the air guiding vane 120 is better during mounting, there is no need to distinguish and position two sides of the air guiding vane 120, the mounting efficiency of the air guiding vane 120 is higher, and the appearance effect of the adjusting assembly 100 is also better.

In other implementations, only one side of the vane body 121 can be designed as the first curved portion 1216, and the other side of the vane body 121 can be designed as a straight portion. An extending direction of the straight portion can be designed according to the datum plane A of the vane body 121, the straight portion can extend along the extending direction of the datum plane A, and a central plane of the straight portion in its thickness direction can be located in the datum plane A.

When one side of the vane body 121 is the first curved portion 1216 and the other side is the straight portion, during the mounting of the air guiding vane 120, the first air guiding side 1212 of the first curved portion 1216 of the vane body 121 can face the outer side of the air outlet 11. Moreover, the range of the rotation angle of the air guiding vane 120 can be controlled so that the first curved portion 1216 of the vane body 121 is always located on the outer side the air outlet 11, and the straight portion of the vane body 121 is always located on the inner side the air outlet 11. Thus, the first air guiding side 1212 is used to guide the outflow air flow and change the air supply angle of the air guiding vane 120.

Of course, as above-mentioned, the straight portion of the vane body 121 can also be located on the outer side of the air outlet 11 and the first curved portion 1216 of the vane body 121 can be located on the inner side the air outlet 11, and the first curved portion 1216 is used to adjust the flow direction of the air flow entering the air guiding channel. Thus, the air supply angle of the air guiding vane 120 is changed. Here, this will not be repeated.

As for the architecture design of all the air guiding vanes 120 in the entire adjusting assembly 100, it may be that all the air guiding vanes 120 are designed into a curved surface shape. In this way, the first air guiding sides 1212 of all the air guiding vanes 120 can increase the air supply deflection angle of the air guiding vanes 120. The air supply angle of the entire adjusting assembly 100 can be changed, so that the deflection angle of the air supply zone of the entire adjusting assembly 100 is increased.

Alternatively, some of the air guiding vanes 120 can be designed into a curved surface shape, and the remaining air guiding vanes 120 can still maintain a planar shape. The air guiding vanes 120 with the curved surface shape can increase the air supply deflection angle of the corresponding area of the adjusting assembly 100. The remaining air guiding vanes 120 with the planar shape maintain the original air supply deflection angle of the corresponding area of the adjusting assembly 100.

At this time, the air guiding vanes 120 close to an end of the air outlet 11 can be designed into a curved surface shape, and the air guiding vanes 120 close to a center of the air outlet 11 can be designed into a planar shape. The air supply deflection angle of the air guiding vanes 120 close to the center of the air outlet 11 is smaller, and the air supply deflection angle of the air guiding vanes 120 close to the end of the air outlet 11 is larger. From the center of the air outlet 11 to the end of the air outlet 11, the air supply deflection angle of the adjusting assembly 100 increases. In this way, the air supply zone of the adjusting assembly 100 is larger, the air supply coverage range is wider, and the air supply is softer.

In the adjusting assembly 100, whether only some of the air guiding vanes 120 are designed into the curved surface shape or all the air guiding vanes 120 are designed into the curved surface shape, all the air guiding vanes 120 with the curved surface shape can keep the same shape. In this way, the air guiding vanes 120 with the curved surface shape have a consistent air supply adjusting effect on the corresponding area of the adjusting assembly 100.

Alternatively, along a direction close to the end of the air outlet 11, that is, from the center of the air outlet 11 to the end of the air outlet 11, among the air guiding vanes 120 with the curved surface shape, the included angle between the extension lines of the first air guiding sides 1212 of the air guiding vanes 120 and the datum plane A can gradually increase. In this way, from the center of the air outlet 11 to the end of the air outlet 11, the air supply deflection angle of the adjusting assembly 100 gradually increases, the air supply zone of the adjusting assembly 100 is larger, the air supply coverage range is wider, and the air supply zone gradually expands outward, the air volume is more dispersed, and the air supply is softer.

Referring to FIG. 20, taking the air guiding structure 20 with two adjusting assemblies 100 as an example, when the air handling device 1 is working, in the adjusting assembly 100 located on the left side of the air outlet 11 in the length direction of the air outlet 11, the first air guiding side 1212 of the air guiding vane 120 with the curved surface shape deflects to the left side of the air outlet 11; and in the adjusting assembly 100 located on the right side of the air outlet 11 in the length direction of the air outlet 11, the first air guiding side 1212 of the air guiding vane 120 with the curved surface shape deflects to the right side of the air outlet 11. The air supply zone of the air guiding structure 20 can be expanded to the left and right sides, and the air supply coverage range of the air guiding structure 20 can be increased. In addition, the carriers 110 of the two adjusting assemblies 100 swing relatively and expand outward, which can further expand the air supply coverage range of the air guiding structure 20.

The following is a detailed description of the air guiding vane 120 with a curved surface shape, specifically the first curved portion 1216 of the air guiding vane 120 is taken as an example for illustration. It can be understood that when the other side of the air guiding vane 120 is designed as the second curved portion 1217, and the second curved portion 1217 has the same shape as the first curved portion 1216, the second curved portion 1217 also has the same characteristics.

Referring to FIG. 21, the included angle α between the extension line of the first air guiding side 1212 of the air guiding vane 120 and its datum plane A may range from 5° to 45°. Taking the air guiding vane 120 perpendicular to the plane direction of the air outlet 11 as a reference, when the included angle α between the extension line of the first air guiding side 1212 and the datum plane A is 5°, the air supply direction of the air guiding vane 120 deflects 5° to the same side of the air outlet 11; when the air guiding vane 120 continues to deflect 85° to the same side of the air outlet 11, the extension line of the first air guiding side 1212 can be parallel to the plane direction of the air outlet 11. When the included angle α between the extension line of the first air guiding side 1212 and the datum plane A is 45°, the air supply direction of the air guiding vane 120 deflects by 45° toward the same side of the air outlet 11; when the air guiding vane 120 continues to deflect by 45° toward the same side of the air outlet 11, the extension line of the first air guiding side 1212 can be parallel to the plane direction of the air outlet 11.

In this way, the air guiding vane 120 only needs to rotate within a small angle range the air guiding vane 120 has a large angle range of air supply zone. The air guiding vane 120 can flexibly adjust the air supply angle and change the air supply zone of the adjusting assembly 100. Moreover, the included angle between the extension line of the first air guiding side 1212 and the datum plane A is not excessively large, the curvature of the first curved portion 1216 is appropriate, and the air guiding vane 120 will not hinder the flow of air flow. The overall wind resistance of the adjusting assembly 100 is very small, which will not affect the air supply volume of the air handling device 1.

Exemplarily, the included angle α between the extension line of the first air guiding side 1212 and its datum plane A may be between 25° and 45°. By enabling the included angle α between the extension line of the first air guiding side 1212 and the datum plane A to be greater than or equal to 25°, when the air guiding vane 120 is perpendicular to the plane direction of the air outlet 11, the deflection angle of the air supply direction of the air guiding vane 120 deflecting to the same side of the air outlet 11 is greater than or equal to 25°. The first air guiding side 1212 can significantly increase the air supply deflection angle of the air guiding vane 120, which can better expand the air supply zone of the adjusting assembly 100.

For example, the included angle α between the extension line of the first air guiding side 1212 and its datum plane A may be 25°, 28°, 30°, 32°, 35°, 38°, 40°, 42°, etc.

Continuing to refer to FIG. 21, the first curved portion 1216 of the vane body 121 may be a smoothly curved portion, and the overall curved shape of the first curved portion 1216 is relatively gentle. The first curved portion 1216 can allow the air flow to flow smoothly along its surface, and change the direction of the air flow without hindering the flow of the air flow. The air flow smoothly flows out of the air guiding channel along the first curved portion 1216, so that the air handling device 1 can stably blow the air flow to the outside.

Moreover, the first curved portion 1216 may have only one curved vertex 12161. That is to say, the first curved portion 1216 is curved only once to a side of the vane body 121 in the thickness direction of the vane body 121. In order to achieve the deflection of the first air guiding side 1212 to the same side of the air outlet 11, the first curved portion 1216 may slightly protrude toward the other side of the air outlet 11. This avoids the first curved portion 1216 from forming a wavy surface with continuous concaves and convexes, preventing the first curved portion 1216 from changing the direction of the air flow multiple times, avoiding affecting the air supply direction of the air guiding vane 120, and ensuring the adjusting effect of the first curved portion 1216 on the air supply deflection angle of the air guiding vane 120. Furthermore, this can also avoid the turbulence of the air flow when flowing through the first curved portion 1216, so as to ensure that the air flow can flow out of the air guiding vane 120 smoothly and orderly, to prevent the loss of the air supply volume of the air handling device 1.

When the first curved portion 1216 has only one curved vertex 12161, the extension line of the first air guiding side 1212 extends to one side of the datum plane A, and the curved vertex 12161 may be located on the other side of the datum plane A. Taking the air guiding vane 120 close to the left side of the air outlet 11 in the length direction of the air outlet 11 as an example, specifically taking the air guiding vane 120 perpendicular to the plane where the air outlet 11 is located as a reference datum, the extension direction of the first air guiding side 1212 of the air guiding vane 120 may extend to the left side of the datum plane A, and the curved vertex 12161 may be located on the right side of the datum plane A.

In this way, it is avoided that the extension line of the first air guiding side 1212 and the curved vertex 12161 of the first curved portion 1216 are located on the same side of the datum plane A, and it is avoided that the first curved portion 1216 is excessively bent toward a side of the air guiding vane 120. The air guiding vane 120 is overall flat with a small curvature, generating low wind resistance. During the long-term use of the air guiding vane 120, the air guiding vane 120 is less pressed by the air flow, so the air guiding vane 120 has higher reliability and longer service life. Moreover, the air guiding vane 120 is still flat as a whole, occupying a small space, which is convenient for the arrangement of the air guiding vane 120 on the carrier 110.

Exemplarily, the center line of the first air guiding side 1212 (which is far away from the central axis of the vane body 121) of the first curved portion 1216 in the thickness direction of the first air guiding side 1212 may be located on the datum plane A. This restricts the curved shape of the first curved portion 1216, limits the first curved portion 1216 to a small curved amplitude, making the vane body 121 smoother, having less resistance to the fluid, and better meeting the efficient air supply demand of the air handling device 1.

When the other side of the vane body 121 is provided with the second curved portion 1217 and the second curved portion 1217 has the same shape as the first curved portion 1216, or when the other side of the vane body 121 is provided with the straight portion, the center line of the second air guiding side 1213 of the vane body 121 in the thickness direction may also be located on the datum plane A. As such, both sides of the vane body 121 are located on its datum plane A, the overall design of the vane body 121 is more inclined to a planar shape, with a more regular shape, good air guiding effect, and high stability and reliability.

In some embodiments, the number of the adjusting assembly 100 is plural, and the plurality of adjusting assemblies 100 include a first adjusting assembly 100 and a second adjusting assembly 100. The plurality of adjusting assemblies 100 may also include a third adjusting assembly, a fourth adjusting assembly, etc. The number of the adjusting assembly may be determined according to actual needs. The following description takes the first adjusting assembly and the second adjusting assembly as examples for illustration.

When the first adjusting assembly 100 and the second adjusting assembly 100 are in the first position, length directions of the first adjusting assembly 100 and the second adjusting assembly 100 are located on the same straight line; when the first adjusting assembly 100 and the second adjusting assembly 100 are in the second position, the ends of the first adjusting assembly 100 and the second adjusting assembly 100, which are close to each other, extend forward out of the mounting bracket 300.

In the first position, the length directions of the first and second adjusting assemblies 100 are aligned to form a straight line. This aligned state provides a basic air supply mode, which may be used for standard or default air supply requirements. By aligning the two assemblies, the air flow can be distributed along a unified direction, ensuring the stability and consistency of the air flow in the basic state.

In the second position, adjacent ends of the first adjusting assembly 100 and the second adjusting assembly 100 extend forward out of the mounting bracket 300. This arrangement allows the adjusting assemblies 100 to change the direction and coverage range of the air flow when in the second position. By extending the adjacent ends forward, the air guiding structure can guide the air flow to concentrate on a specific zone, increasing the flexibility and coverage area of the air supply. This configuration helps to reduce air supply blind zones and provides a more concentrated air flow distribution.

Specifically, through the cooperative work of a plurality of adjusting assemblies 100, the air guiding structure can adapt to more complex air supply needs and provide a variety of air flow direction options. The configuration of the adjusting assemblies 100 in different positions ensures that the adjustment of the air flow direction is more precise and controllable, and the air flow direction can be flexibly adjusted according to specific needs.

In some embodiments, the first adjusting assembly 100 has a first positioning portion 113, and the first positioning portion 113 is close to the second adjusting assembly 100; the second adjusting assembly 100 has a second positioning portion 114, and the second positioning portion 114 is close to the first adjusting assembly 100; in the front-to-rear direction of the mounting bracket 300, a distance between the first positioning portion 113 and the second positioning portion 114 gradually increases.

Each of the first adjusting assembly 100 and the second adjusting assembly 100 has a positioning portion; these positioning portions are located on sides of the two assemblies being adjacent to each other. The positioning portions help to establish a datum point or a reference point between the two adjusting assemblies 100, which can ensure that the two assemblies maintain a certain relative position relationship during movement or adjustment.

In the front-to-rear direction of the mounting bracket 300, the distance between the first positioning portion 113 and the second positioning portion 114 gradually increases, which can prevent interference between the first adjusting assembly 100 and the second adjusting assembly 100 during their movements.

In some embodiments, when the first adjusting assembly 100 and the second adjusting assembly 100 are in the first position, front sides of the first positioning portion 113 and the second positioning portion 114 are close to each other; when the first adjusting assembly 100 and the second adjusting assembly 100 are in the second position, rear sides of the first positioning portion 113 and the second positioning portion 114 are close to each other.

It can be understood that in the first position, the front sides of the first positioning portion 113 and the second positioning portion 114 are close to each other, which can realize a symmetrical state of the first adjusting assembly 100 and the second adjusting assembly 100, with their positions corresponding to each other to form a relatively closed structure, which can be used to concentrate the air flow or reduce the dispersion of the air flow.

In the second position, the rear sides of the first positioning portion 113 and the second positioning portion 114 are close to each other, which also achieves mutual correspondence of their positions, and changes the flow mode of the air flow, making the air flow change direction or gradually diffuse.

In some embodiments, the adjusting assembly 100 includes a carrier 110 and a plurality of air guiding vanes 120 provided on the carrier 110.

By providing the carrier 110, it is only necessary to control the movement of the carrier 110 relative to the mounting bracket 300 to drive a synchronous movement of the plurality of air guiding vanes 120, which can reduce the control difficulty of the adjusting assembly 100.

By adjusting the angle and position of the vanes, precise control of the air flow can be achieved to meet different air supply needs. This design helps to reduce air supply blind zones, optimize air flow distribution, and improve indoor comfort.

In some embodiments, the air guiding vane 120 is provided on the front side of the carrier 110.

The air guiding vane 120 is provided on the front side of the carrier 110 to close to an air outflow area. The air guiding vane 120 can guide and adjust the air flow as the air flow just leaves the air outflow area, thereby achieving more timely and effective air flow control.

In addition, since the air guiding vane 120 is provided on the front side of the carrier 110, it is not easily blocked by other components, and the length of the air guiding vane 120 can be set longer to improve the air guiding effect.

In some embodiments, when the adjusting assembly 100 moves between the first position and the second position along a predetermined path, the adjusting assembly 100 moves toward middle of the front side of the mounting bracket 300.

When the adjusting assembly 100 moves between the first position and the second position along the predetermined path, the movement toward the middle of the front side can ensure that the air flow is effectively guided and concentrated when leaving the air outlet area, reducing the scattering and dispersion of the air flow. This configuration helps to achieve more concentrated air flow control and improves the efficiency and effect of the air supply.

In some embodiments, a third position is provided between the first position and the second position; when the adjusting assembly 100 is in the third position, a limiting component can limit the movement of the adjusting assembly 100, and a second included angle is formed between the length direction of the adjusting assembly 100 and the length direction of the mounting bracket 300, and the second included angle is smaller than a first included angle.

Adding an intermediate position, i.e., the third position, between the first position and the second position can provide an intermediate state for the adjusting assembly 100, so that the air flow control is more flexible and precise to adapt to more diverse air supply needs.

When the adjusting assembly 100 is in the third position, the limiting component can limit its further movement, ensuring the stability and safety of the adjusting assembly 100 in the third position and preventing its accidental movement or deviation from the predetermined position.

In the third position, an included angle formed between the adjusting assembly 100 and the mounting bracket 300 is smaller than the included angle in the second position. The second included angle being smaller than the first included angle means that the deflection degree of the adjusting assembly 100 is smaller in the third position. This smaller deflection angle provides a relatively gentle air flow adjusting method, which is suitable for scenarios where a slight adjustment of the air flow direction is required.

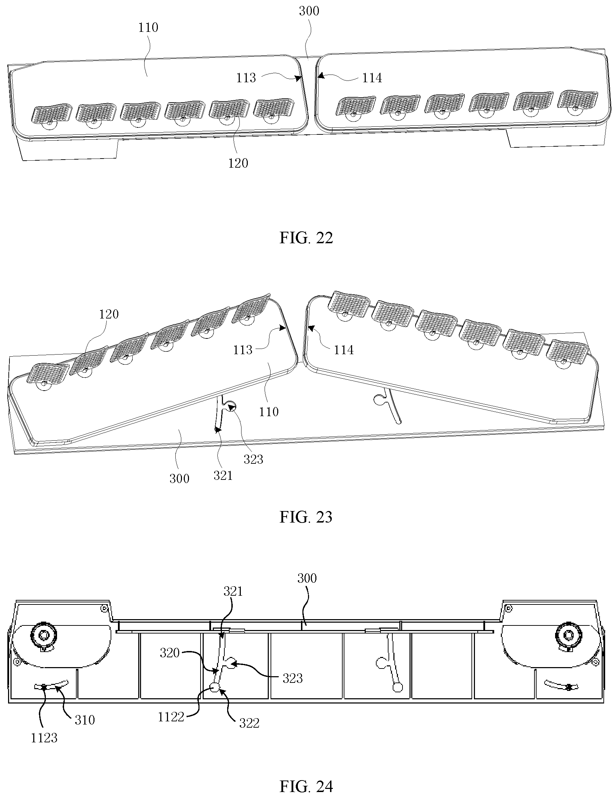

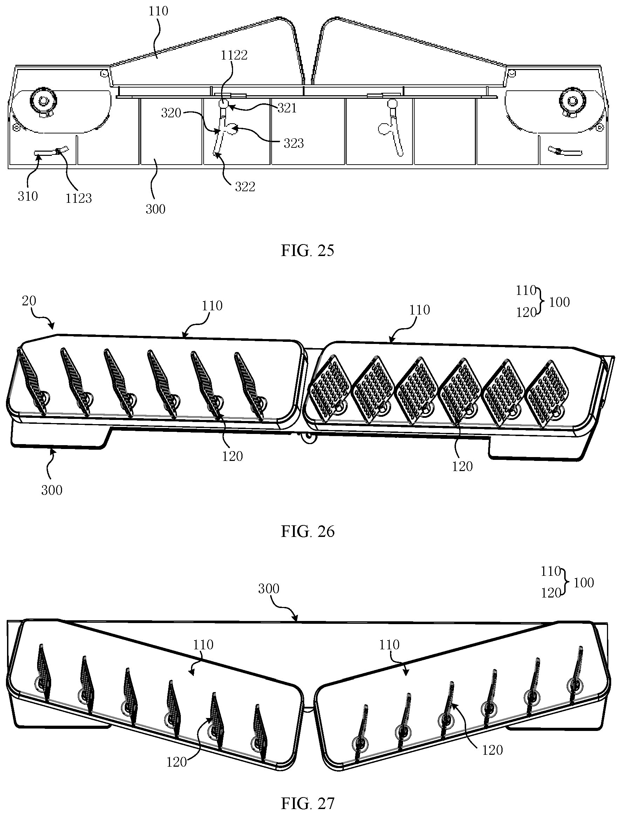

Referring to FIG. 24 and FIG. 25, in some possible implementations, the limiting component may include a second limiting shaft 1122 and a second limiting groove 320 that cooperate with each other. One of the second limiting shaft 1122 and the second limiting groove 320 may be provided on the mounting bracket 300, and the other of the second limiting shaft 1122 and the second limiting groove 320 may be provided on the adjusting assembly 100.

When the adjusting assembly 100 is in the first position, the adjusting assembly 100 is in a retracted state, and the carrier 110 and the air guiding vane 120 in the adjusting assembly 100 may be located on the inner side of the device body, and the device body may be in a standby state.

When the adjusting assembly 100 is in the second position, the adjusting assembly 100 is in an extended state, and the carrier 110 and the air guiding vanes 120 in the adjusting assembly 100 may be located on the outer side the device body, and the device body may be in a working state, so that the device body can supply air through the air guiding vane 120 of the adjusting assembly 100, and the air guiding vane 120 can play a certain adjustment role in an air supply process of the device body.

When the adjusting assembly 100 moves relative to the mounting bracket 300 between the first position and the second position, the adjusting assembly 100 can be slidably connected to the mounting bracket 300 through the second limiting shaft 1122 and second limiting groove 320 that cooperate with each other, so that a motion process of the adjusting assembly 100 relative to the mounting bracket 300 is more stable, reducing the possibility of the adjusting assembly 100 being separated from the mounting bracket 300.

Exemplarily, the second limiting shaft 1122 may be provided on the adjusting assembly 100. For example, the second limiting shaft 1122 may be provided at the bottom of the carrier 110. The second limiting groove 320 may be provided on the mounting bracket 300, so that the second limiting shaft 1122 located on the bottom plate of the carrier 110 can pass through and be provided in the second limiting groove 320, thereby enabling the adjusting assembly 100 to be slidably connected to the mounting bracket 300 through the second limiting shaft 1122 and second limiting groove 320 that cooperate with each other.

In some possible implementations, the second limiting groove 320 may have a first limiting portion 321 and a second limiting portion 322. The first limiting portion 321 is close to the rear side of the mounting bracket 300, and the second limiting portion 322 is close to the front side of the mounting bracket 300. The second limiting shaft 1122 can move between the first limiting portion 321 and the second limiting portion 322 along the extending direction of the second limiting groove 320.

Exemplarily, when the second limiting shaft 1122 is located at the first limiting portion 321, the first limiting portion 321 can limit the movement of the second limiting shaft 1122, so that the adjusting assembly 100 can be in the first position. The first limiting portion 321 and second limiting shaft 1122 that cooperate with each other can at least limit the movement of the adjusting assembly 100, so that the adjusting assembly 100 will not be separated from the mounting bracket 300.

When the second limiting shaft 1122 is located at the second limiting portion 322, the second limiting portion 322 can limit the movement of the second limiting shaft 1122, so that the adjusting assembly 100 can be in the second position. The second limiting portion 322 and second limiting shaft 1122 that cooperate with each other can at least limit the movement of the adjusting assembly 100, so that the adjusting assembly 100 will not be separated from the mounting bracket 300.

It should be noted that the first limiting portion 321 may be located at a first end of the second limiting groove 320, and the first limiting portion 321 may be provided as a part of the inner wall of the end of the second limiting groove 320, so that the second limiting shaft 1122 is not separated from the second limiting groove 320 by abutment between part of the inner wall of the first end of the second limiting groove 320 and the second limiting shaft 1122.

The second limiting portion 322 may be located at a second end of the second limiting groove 320, and the second limiting portion 322 may be provided as a part of the inner wall of the end of the second limiting groove 320, so that the second limiting shaft 1122 is not separated from the second limiting groove 320 by the abutment between part of the inner wall of the second end of the second limiting groove 320 and the second limiting shaft 1122.

Referring to FIG. 22-FIG. 25, in some possible implementations, the limiting component further includes a first limiting shaft 1123 and a first limiting groove 310 that cooperate with each other. One of the first limiting shaft 1123 and the first limiting groove 310 is provided on the mounting bracket 300, and the other of the first limiting shaft 1123 and the first limiting groove 310 is provided on the adjusting assembly 100.

For example, the first limiting shaft 1123 may be provided at the bottom of the carrier 110. The first limiting groove 310 may be provided on the mounting bracket 300, so that the first limiting shaft 1123 located on the bottom plate of the carrier 110 can pass through and be provided in the first limiting groove 310, thereby enabling the adjusting assembly 100 to be slidably connected to the mounting bracket 300 through the first limiting shaft 1123 and first limiting groove 310 that cooperate with each other.

In the extending direction of the mounting bracket 300, compared with the first limiting shaft 1123 and the first limiting groove 310, the second limiting shaft 1122 and the second limiting groove 320 may be further closer to the middle of the mounting bracket 300, so that the second limiting shaft 1122 and the second limiting groove 320 can better limit the movement of the adjusting assembly 100 relative to the mounting bracket 300.

In some possible implementations, a first end of the first limiting groove 310 may be close to an edge of the mounting bracket 300, and a second end of the first limiting groove 310 may be close to the middle of the mounting bracket 300.

Exemplarily, when the adjusting assembly 100 moves from the first position to the second position, the first limiting shaft 1123 can move toward the second end of the first limiting groove 310; when the adjusting assembly 100 moves from the second position to the first position, the first limiting shaft 1123 can move toward the first end of the first limiting groove 310.

When the adjusting assembly 100 moves from the first position to the second position, the first limiting shaft 1123 can move toward the second end of the first limiting groove 310, and the second limiting shaft 1122 can move toward the second limiting portion 322 in the second limiting groove 320, so that the adjusting assembly 100 can move toward the middle of the front side of the mounting bracket 300, and the air guiding vane 120 of the adjusting assembly 100 can more easily supply air toward the indoor, thereby improving the air outflow effect of the air guiding vane 120 of the adjusting assembly 100.

When the adjusting assembly 100 moves from the second position to the first position, the first limiting shaft 1123 can move toward the first end of the first limiting groove 310, and the second limiting shaft 1122 can move toward the first limiting portion 321 in the second limiting groove 320, so that the adjusting assembly 100 can move toward the rear side of the mounting bracket 300, thereby achieving the retraction process of the adjusting assembly 100.

Exemplarily, in a front-rear direction of the mounting bracket 300, the first limiting groove 310 may be close to the rear side of the mounting bracket 300, so that the rotation direction of the adjusting assembly 100 can be closer to the front side of the mounting bracket 300, enabling that the adjusting assembly 100 can be more easily extended out from the front side of the mounting bracket 300.

The first limiting groove 310 may extend along a circumferential direction of the output shaft of the drive motor 210, so that it is more convenient for the drive motor 210 to control the rotation of the carrier 110 relative to the mounting bracket 300, and a distance between the output shaft of the drive motor 210 and the first limiting shaft 1123 in the first limiting groove 310 can be reduced. The drive motor 210 can drive the carrier 110 to rotate relative to the mounting bracket 300 through the transmission component 220, so that the arrangement of the transmission component 220 is more convenient.

In some possible implementations, the second limiting groove 320 may further be provided with a third limiting portion 323. In the extending direction of the second limiting groove 320, the third limiting portion 323 is located between the first limiting portion 321 and the second limiting portion 322.

When the second limiting shaft 1122 is located at the third limiting portion 323, the adjusting assembly 100 is in the third position, and the third limiting portion 323 and second limiting shaft 1122 that cooperate with each other can limit the movement of the adjusting assembly 100. In the length direction of the mounting bracket 300, the third limiting portion 323 is closer to the middle of the mounting bracket 300 relative to the first limiting portion 321 and the second limiting portion 322.

When the adjusting assembly 100 is in the third position, the limiting component can limit its further movement, ensuring the stability and safety of the adjusting assembly 100 in the third position and preventing accidental movement of the adjusting assembly 100 or deviation from the predetermined position.

In the third position, the included angle formed between the adjusting assembly 100 and the mounting bracket 300 is smaller than the included angle when being in the second position. The second angle being smaller than the first angle means that the deflection degree of the adjusting assembly 100 is smaller in the third position. This smaller deflection angle provides a relatively gentle air flow adjusting method, which is suitable for scenarios where a slight adjustment of the air flow direction is required.

The air guiding structure 20 further includes a first motor 600 and a second motor 400, and the first motor 600 and the second motor 400 are connected to the adjusting assembly 100. The first motor 600 and the second motor 400 drive the adjusting assembly 100 to move, so as to achieve the adjustment of the air supply angle by the adjusting assembly 100.

In the present application, when the first motor 600 and the second motor 400 drive the adjusting assembly 100 to move, they can both drive the carrier 110 to move and drive the air guiding vane 120 on the carrier 110 to move. Of course, they can also drive the carrier 110 and the air guiding vane 120 to move at the same time.

It can be understood that by driving each air guiding vane 120 on the carrier 110 to move through the first motor 600 and the second motor 400, each air guiding vane 120 can change its position relative to the carrier 110. At this time, an included angle between each air guiding vane 120 and a certain direction of the plate surface of the carrier 110 changes, so that each air guiding vane 120 deflects uniformly toward a side of the air outlet, achieving the effect of adjusting the air supply angle of the air guiding structure 20.

It can also be understood that by driving the carrier 110 to move through the first motor 600 and the second motor 400, at this time, the carrier 110 changes its position relative to the air outlet, and a distance between the carrier 110 and the basic air duct wall changes. Moreover, since the air guiding vanes 120 are provided on the carrier 110, each air guiding vane 120 on the carrier 110 also moves together with the carrier 110. At this time, even if the air guiding vanes 120 do not change their positions relative to the carrier, the positions of the air guiding vanes 120 relative to the air outlet are changed. This can also achieve effect of adjusting the air supply angle of the air guiding structure 20.

Of course, when the carrier 110 changes its position relative to the air outlet, if the air guiding vane 120 also change its position relative to the carrier 110, the position change at this time can weaken or even eliminate the limitation of the air duct on the deflection angle of the air guiding vane 120. This achieves increasing the range of the deflection angle of the air guiding vane 120 relative to the carrier 110. When the deflection angle of the carrier 110 relative to the air outlet is adjustable, on the basis of changing the deflection angle of the carrier 110, adjusting the deflection angle of the air guiding vane 120 relative to the carrier 110 can further increase the range of the deflection angle of the air guiding vane 120 relative to the air outlet, increasing the air supply angle of the air guiding structure 20 and thereby expanding the air supply angle range of the air guiding structure 20 to enable the air handling device to cover a larger air supply area.

As for the number of the air guiding structure 20 in the device body, it may be two or more. As an optional implementation, the number of the air guiding structure 20 may be two, and the two air guiding structures 20 may be provided at an interval along the length direction of the air outlet. Matching the air guiding structures 20, the number of the first motor 600 and the second motor 400 may also be two. The two first motors 600 and the two second motors 400 are respectively connected to the adjusting assemblies 100 in the two air guiding structures 20, and the first motors 600 and the second motors 400 drive the corresponding adjusting assemblies 100 to move.

In this way, the two adjusting assemblies 100 can supply air to different zones respectively, and the two adjusting assemblies 100 have different air supply zones respectively, which can expand the air supply zone of the air guiding structure 20 and the air supply coverage area of the indoor unit 10 of the air handling device.

By independently driving the two adjusting assemblies 100 through two motors, the first motors 600 and the second motor 400 respectively, the air supply zones of the two adjusting assemblies 100 can be independently adjusted without any linkage between them. In this way, the air handling device can be applied to different indoor layouts and usage needs, and the user can flexibly adjust the air supply zones of the two adjusting assemblies 100 according to the actual conditions. This meets the needs of different environments for different air supply zones, so that the air flow blown by the air handling device can be fully and effectively utilized, avoiding waste.

In some possible implementations, the first motor 600 may be directly mounted on a housing of the indoor unit 10, or the first motor 600 may be provided on the mounting bracket 300. The first motor 600 is at least used to drive the carrier 110 to move relative to the mounting bracket 300, so as to adjust the position of the carrier 110 through the first motor 600.

The second motor 400 may be directly mounted on the housing of the indoor unit 10, or the second motor 400 may be provided on the mounting bracket 300. The second motor 400 is at least used to drive the air guiding vanes 120 to move relative to the carrier 110, so as to adjust the position of the air guiding vane 120 through the second motor 400, thereby increasing a motion range of the air guiding vane 120.

It should be noted that the air guiding structure 20 may include a mounting bracket 300, so that the mounting bracket 300 can be used to mount the carrier 110, the first motor 600, the second motor 400, etc. Alternatively, the air guiding structure 20 may not include the mounting bracket 300, and the carrier 110, the first motor 600, and the second motor 400 may be directly mounted on the housing of the indoor unit 10, thereby reducing the number of parts required by the air guiding structure 20 and simplifying structure of the indoor unit 10.

The following implementations take the air guiding structure 20 including the mounting bracket 300 as an example to describe specific components of the air guiding structure 20. It should be noted that the housing of the indoor unit 10 can be reused as the mounting bracket 300, so that the carrier 110, the first motor 600, and the second motor 400 can be directly mounted on the housing of the indoor unit 10.

When it is necessary to guide the air supply process of the indoor unit 10 through the air guiding structure 20, the first motor 600 can drive the carrier 110 to move relative to the mounting bracket 300, and the second motor 400 can drive the air guiding vane 120 to move relative to the carrier 110, thereby increasing the motion range of the air guiding vane 120 relative to the mounting bracket 300, achieving a control of the air supply angle of the indoor unit 10, enabling the air guiding structure 20 to adapt to different room layouts and user needs, helping to reduce air supply blind zones and optimize the air flow distribution.

By independently driving the carrier 110 and the air guiding vane 120 through the first motor 600 and the second motor 400, the air guiding vane 120 can not only move to the outer side of the air outlet together with the carrier 110, but also increase the rotation angle of the air guiding vane 120, thereby increasing angle change of the air outflow direction by the air guiding vane 120, improving the air guiding effect of the air guiding vane 120, and expanding the air supply zone of the air handling device.

By independently controlling the air guiding vane 120 and the carrier 110 through the first motor 600 and the second motor 400, it is beneficial to improving the accuracy of air flow adjustment. The user can independently adjust the air supply angle range of the air guiding vane 120 or the carrier 110 as needed, reducing the possibility of mutual interference between the first motor 600 and the second motor 400. A combination of the first motor 600 and the second motor 400 provides a larger adjusting range and flexibility to achieve a complex air flow mode, so as to adapt to different room layouts and usage scenarios.

By adjusting the angles of the air guiding vane 120 and the carrier 110 respectively, more uniform and effective air flow distribution can be achieved. Precise air flow control can reduce the operating time and energy consumption of the air handling device (e.g., an air conditioning device) applying the air guiding structure 20, thereby improving the overall energy efficiency. Since the first motor 600 and the second motor 400 are independently provided, a single motor can be replaced or adjusted as needed during later maintenance without large-scale adjustments to an entire system, thereby reducing maintenance costs. In some possible implementations, the carrier 110 may include an upper housing 211 and a lower housing 212 connected to each other. The upper housing 211 and the lower housing 212 enclose an accommodating cavity 2101, and the accommodating cavity 2101 can provide an mounting base for other structures (for example a subsequent second transmission assembly 700 and other structures) so as to play a certain supporting and protective role for the other structures.

It should be noted that the mounting bracket 300 can be used to be mounted at the air outlet of the indoor unit 10, and the mounting bracket 300 can be fixedly connected to the outer shell of the indoor unit 10. A top surface of the mounting bracket 300 can be used as the mounting base for the carrier 110, so that the carrier 110 can move relative to the mounting bracket 300, to enable at least part of the carrier 110 to extend out of the air outlet of the indoor unit 10.

Exemplarily, the lower housing 212 of the carrier 110 can be configured to be mounted on the mounting bracket 300, so that the carrier 110 can rotate relative to the mounting bracket 300 through the lower housing 212. The upper housing 211 of the carrier 110 can be used to mount the air guiding vane 120, so that the air guiding vane 120 can rotate relative to the upper housing 211 of the carrier 110.

In some possible implementations, the first motor 600 can drive the carrier 110 to rotate relative to the mounting bracket 300 around a preset rotating shaft 900, and the output shaft of the first motor 600 can be provided at an interval with the preset rotating shaft 900.

Exemplarily, the second motor 400 can drive the air guiding vane 120 to rotate relative to the carrier 110, and the output shaft of the second motor 400 can be coaxially provided with the preset rotating shaft 900.

That is to say, the first motor 600 and the second motor 400 can be provided at an interval, and the output shaft of the first motor 600 does not coincide with the output shaft of the second motor 400, so that both the first motor 600 and the second motor 400 can be mounted on a surface of the mounting bracket 300 away from the carrier 110, so as to reduce a mounting thickness required by the first motor 600 and the second motor 400, thereby reducing the overall height of the air guiding structure 20 and an assembly space required by the air guiding structure 20.

It should be noted that the preset rotating shaft 900 of the carrier 110 can be used to represent a connecting rotating shaft between the carrier 110 and the mounting bracket 300. For example, when the number of the carrier 110 is two and the two carriers 110 are provided side by side, the preset rotating shaft 900 of the carrier 110 can be located at the edges of the carriers 110 (i.e., the sides of the two carriers 110 far away from each other), so that the ends of the carriers 110 close to each other can extend out of the air outlet of the indoor unit 10.

When the carrier 110 rotates relative to the mounting bracket 300 around the preset rotating shaft 900, the first motor 600 can drive the carrier 110 to rotate, and an end of the carrier 110 close to the middle of the air outlet can extend out from the air outlet, so that at least part of the air guiding vanes 120 on the carrier 110 can move to the outer side of the air outlet.

In some possible implementations, the air guiding structure 20 may further include a first transmission assembly 500. The output end of the first motor 600 can drive the carrier 110 to rotate relative to the mounting bracket 300 around the preset rotating shaft 900 through the first transmission assembly 500, so as to achieve the adjusting process of the position of the carrier 110.

Exemplarily, the first transmission assembly 500 may include a gear 510 and an arc-shaped rack 520 that cooperate with each other. The gear 510 is coaxially and fixedly connected to the output shaft of the first motor 600, and the output shaft of the first motor can drive the gear 510 to rotate. The arc-shaped rack 520 is provided on the carrier 110, a central axis of the arc-shaped rack 520 coincides with the preset rotating shaft 900, and the arc-shaped rack 520 meshes with the gear 510, so that the rotation of the gear 510 can drive the arc-shaped rack 520 to move around the preset rotating shaft 900.

By adopting the above technical solution, when the first motor 600 drives the carrier 110 to rotate relative to the mounting bracket 300, the output end of the first motor 600 can drive the gear 510 to rotate, so that the gear 510 drives the arc-shaped rack 520 to rotate around the preset rotating shaft by meshing with the arc-shaped rack 520, and the central axis of the circle corresponding to the arc of the arc-shaped rack 520 coincides with the preset rotating shaft 900, so that the arc-shaped rack 520 can rotate around the preset rotating shaft 900, and the gear 510 can rotate around the output shaft of the first motor 600, thereby achieving the rotation of the carrier 110.

Moreover, the first motor 600 drives the carrier 110 to move through the gear 510, and an overall structure of the first motor 600 is fixed relative to the mounting bracket 300, so that the first motor 600 can be directly mounted on the mounting bracket 300, the output shaft of the first motor 600 can pass through and be provided on the mounting bracket 300, and the output shaft of the first motor 600 can be coaxially connected to the gear 510 located on the carrier 110, thereby enabling the mounting bracket 300 to provide a mounting and support base for the first motor 600.

Exemplarily, the arc-shaped rack 520 may be fixedly connected to the lower housing 212 of the carrier 110. For example, the carrier 110 may be provided with a mounting groove 2121, and the arc-shaped rack 520 may be fixedly provided in the mounting groove 2121 to reduce the thickness of the arc-shaped rack 520 extending out of the lower housing 212 and the overall thickness of the carrier 110.

The output shaft of the first motor 600 can pass through and be provided on the mounting bracket 300, so that the output shaft of the first motor 600 can extend to the lower housing 212 of the carrier 110. The gear 510 can be movably provided in the mounting groove 2121, and the gear 510 meshes with the arc-shaped rack 520. When the gear 510 meshes with the arc-shaped rack 520 and drives the arc-shaped rack 520 to rotate around the preset rotating shaft, the gear 510 can move in the mounting groove 2121, so that the gear 510 can always mesh with the arc-shaped rack 520.

It should be noted that the arc-shaped rack 520 has opposite inner and outer side surfaces. The inner side surface of the arc-shaped rack 520 faces the preset rotating shaft, and the outer side surface of the arc-shaped rack 520 faces away from the preset rotating shaft.

Teeth of the arc-shaped rack 520 may be located on the outer side surface of the arc-shaped rack 520, and the gear 510 is located on the outer side surface of the arc-shaped rack 520 and meshes with the teeth of the arc-shaped rack 520. Alternatively, the teeth of the arc-shaped rack 520 may be located on the inner side surface of the arc-shaped rack 520, and the gear 510 may be located on the inner side surface of the arc-shaped rack 520 and meshes with the teeth of the arc-shaped rack 520.

A central angle of the arc-shaped rack 520 is equal to a maximum rotation angle of the carrier 110 relative to the mounting bracket 300, and the central angle of the arc-shaped rack 520 may be greater than or equal to 25 degrees, so that the maximum rotation angle of the carrier 110 relative to the mounting bracket 300 may be greater than or equal to 25 degrees.

In some possible implementations, the carrier 110 may be provided with a guiding component 1122. The guiding component 1122 can guide the carrier 110 to rotate relative to the housing of the indoor unit 10 around the preset rotating shaft 900.

It should be noted that the guiding component 1122 can be used to play a role in guiding and limiting the rotation of the carrier 110, so that the force between the carrier 110 and the mounting bracket 300 is more uniform, thereby making the rotation process of the carrier 110 relative to the mounting bracket 300 more stable.

The guiding component 1122 can guide the carrier 110 to rotate relative to the housing of the indoor unit 10 around the preset rotating shaft 900. This can be understood as: when the carrier 110 is provided with the guiding component 1122, the guiding component 1122 can contact the mounting bracket 300 or the housing of the indoor unit 10, and the motion trajectory of the guiding component 1122 is coaxially arranged with the carrier 110.

Exemplarily, the mounting bracket 300 or the housing of the indoor unit 10 may be provided with a guiding groove 320, and the guiding groove 320 may extend around the preset rotating shaft 900, so that the guiding component 1122 can move around the preset rotating shaft 900 within the guiding groove 320. Thus, the guiding component 1122 and guiding groove 320 that cooperate with each other can make the rotation process of the carrier 110 more stable.

The guiding component 1122 may be located on the outer side of the arc-shaped rack 520. The guiding component 1122 may face the outer side surface of the arc-shaped rack 520, and the guiding component 1122 is farther away from the preset rotating shaft 900 relative to the arc-shaped rack 520. When the gear 510 meshes with the arc-shaped rack 520 to enable the carrier 110 to rotate relative to the housing of the indoor unit 10 around the preset rotation axis, the second motor 400 located on the inner side of the arc-shaped rack 520 and the guiding component 1122 located on the outer side of the arc-shaped rack 520 can respectively play a certain supporting role for the gear 510 and the arc-shaped rack 520, so that the forces on the inner and outer sides of the arc-shaped rack 520 are more uniform, thereby improving the stability of the carrier 110 during rotation relative to the mounting bracket 300.

In some possible implementations, the lower housing 212 can be rotatably provided on the mounting bracket 300, and the lower housing 212 is connected to the output shaft of the first motor 600, so that the first motor 600 can drive the lower housing 212 to rotate relative to the mounting bracket 300 around the preset rotation axis.

The upper housing 211 of the carrier 110 may be provided with the air guiding vanes 120. The number of the air guiding vanes 120 is plural, and the plurality of the air guiding vanes 120 are sequentially provided at an interval along a first direction. The first direction may be parallel to the extending direction of the air outlet of the indoor unit 10, and the arrangement direction of the plurality of air guiding vanes 120 may be parallel to the extending direction of the air outlet of the indoor unit 10.

The air guiding structure 20 further includes a second transmission assembly 700, and the second transmission assembly 700 is located in the accommodating cavity 2101. An input end of the second transmission assembly 700 is connected to the second motor 400, and an output end of the second transmission assembly 700 is connected to the air guiding vane 120, so that the second motor 400 can drive the plurality of air guiding vanes 120 to rotate relative to the carrier 110 through the second transmission assembly 700.

In some possible implementations, the second transmission assembly 700 includes a transmission connecting rod 710, an input connecting rod 720, and a plurality of output connecting rods 730. The output shaft of the second motor 400 may be connected to one air guiding vane 120.

A first end of the input connecting rod 720 is fixedly connected to an output end of the second motor 400, a second end of the input connecting rod 720 is rotatably connected to the transmission connecting rod 710, and the transmission connecting rod 710 extends along the first direction.

The output connecting rods 730 are provided in parallel with the input connecting rod 720, a first end of the output connecting rod 730 is rotatably connected to the transmission connecting rod 710, and a second end of the output connecting rod 730 is fixedly connected to a corresponding air guiding vane 120.

The second motor 400 is used to drive the air guiding vane 120 to change its position. Exemplarily, the second motor 400 is used to drive the air guiding vane 120 to change its position relative to the carrier 110. For example, the second motor 400 is used to drive the air guiding vane 120 to translate and/or rotate relative to the carrier 110, so that the air guiding vane 120 can swing to adjust the air direction.

In the extending direction of the carrier 110, the transmission connecting rod 710 is movably connected to the carrier 110. When the transmission connecting rod 710 moves along the extending direction of the adjusting assembly 100, it drives the air guiding vane 120 connected to the transmission connecting rod 710 to rotate relative to the carrier 110, so that the air guiding vane 120 connected to the transmission connecting rod 710 can rotate relative to the carrier 110 and thus can adjust the air supply angle, thereby changing the air supply direction of the air guiding assembly.

By providing the transmission connecting rod 710 and drivingly connecting all the air guiding vanes 120 on the adjusting assembly 100 to the transmission connecting rod 710, the transmission connecting rod 710 can drive the air guiding vanes 120 to rotate relative to the carrier 110, ensuring the flexibility, stability, and efficiency of the movement of the air guiding assembly. The design of the transmission connecting rod 710 can optimize torque transmission and reduce energy loss. The design of the transmission connecting rod 710 can further reduce friction and wear, improving the reliability of the system.

In a possible implementation, the second motor 400 is used to drive the air guiding vane 120 drivingly connected to the second motor 400 to rotate relative to the carrier 110, thereby driving the transmission connecting rod 710 connected to the air guiding vane 120 to move along the extending direction of the adjusting assembly 100. When the transmission connecting rod 710 moves along the extending direction of the adjusting assembly 100, it can drive all the air guiding vanes 120 connected to the transmission connecting rod 710 to rotate relative to the carrier 110, thereby adjusting the air supply angle and thus changing the air supply direction of the air guiding assembly.

Exemplarily, the second motor 400 may be drivingly connected to the air guiding vane 120 located at the end of the adjusting assembly 100. This can enable the second motor 400 to be located at an end of the adjusting assembly 100, reducing the assembly difficulty.

Of course, in some other embodiments, the second motor 400 may also be drivingly connected to the air guiding vane 120 located near the middle of the adjusting assembly 100. This can enable the second motor 400 to have some of air guiding vanes 120 on both sides of the extending direction of the adjusting assembly 100, which can optimize the distribution of the driving force and reduce energy consumption. In this embodiment of the present application, a mounting position of the second motor 400 is not further limited.

By providing the second motor 400 and drivingly connecting the second motor 400 to one of the air guiding vanes 120, the rotation of the air guiding vane 120 can drive the transmission connecting rod 710 connected to the air guiding vane 120 to move, and further drive other air guiding vanes 120 connected to the transmission connecting rod 710 to rotate together. This can reduce the assembly difficulty of the second motor 400 and provide precise motion control capability, thereby accurately adjusting the angle of the air guiding vanes 120 as needed and making air flow management more efficient and accurate.

In some other embodiments, the second motor 400 may also be drivingly connected to the transmission connecting rod 710, and the second motor 400 is used to drive the transmission connecting rod 710 to move along the extending direction of the adjusting assembly 100, thereby driving the plurality of air guiding vanes 120 connected to the transmission connecting rod 710 to rotate.

By providing the second motor 400, precise motion control capability can be provided, thereby accurately adjusting the angle of the air guiding vane 120 as needed and making the air flow management more efficient and accurate. By drivingly connecting the second motor 400 to the transmission connecting rod 710, the transmission connecting rod 710 can effectively transmit the rotational movement of the second motor 400 to the air guiding vane 120, ensuring the flexibility, stability, and efficiency of the movement.

In one possible implementation, the transmission connecting rod 710 is provided along the extending direction of the adjusting assembly 100 and is connected to all the air guiding vanes 120 of the adjusting assembly 100.

By setting the transmission connecting rod 710 as a connecting rod, it can simplify the structure of the transmission connecting rod 710, with a simple processing technology and low cost, which is suitable for large-scale production and application. In addition, the transmission connecting rod 710 is a simple and reliable mechanical structure that can effectively convert the rotational movement of the motor into linear or swinging movement of the air guiding vane 120, helping to improve the reliability and durability of the system. Due to geometric characteristics of the transmission connecting rod 710, it can provide precise motion control, enabling the air guiding vane 120 to perform accurate angle adjustment within a set range, thereby achieving more precise air flow management.

Of course, in other embodiments, the transmission connecting rod 710 may also be a crank-link mechanism, a gear 510-rack mechanism, a cam mechanism, an eccentric wheel mechanism, an electric push rod, a stepping motor or servo motor drive, a pneumatic or hydraulic cylinder gear 510, a universal joint, a ball hinge, or the like. In the embodiments of the present application, the specific structure of the transmission connecting rod 710 is not further limited.

In some possible implementations, the first motor 600 may be fixedly provided on the side of the mounting bracket 300 away from the carrier 110; the output end of the first motor 600 passes through and is provided on the mounting bracket 300; and the output end of the first motor 600 is connected to the carrier 110.

The second motor 400 may be movably provided on the side of the mounting bracket 300 away from the carrier 110. The mounting bracket 300 is provided with an escape opening 330, and the second motor 400 is connected to the carrier 110 through the escape opening 330.

It should be noted that by setting the first motor 600 in the middle of the carrier 110 (with the second motor 400 located at the end of the carrier 110), the second motor 400 can be relatively fixed to the mounting bracket 300, and the mounting bracket 300 will not interfere with the operation of the second motor 400, making the rotation process of the carrier 110 more stable. Thus, there is no need to provide structures such as the escape opening 330 on the mounting bracket 300, making the structure of the mounting bracket 300 simpler.

In summary, the air guiding structure 20 includes an adjusting assembly 100, a first motor 600, and a second motor 400. The following description is provided by taking the air guiding structure 20 including a mounting bracket 300 as an example: the mounting bracket 300 is to be provided inside the housing of the indoor unit 10, and the mounting bracket 300 may be close to the air outlet of the indoor unit 10. The adjusting assembly 100 includes the carrier 110 and the air guiding vane 120; the carrier 110 is movably provided on the mounting bracket 300, and the air guiding vane 120 is movably provided on the carrier 110, so that the carrier 110 can move relative to the mounting bracket 300 and the air guiding vane 120 can move relative to the carrier 110.

The first motor 600 is provided on the mounting bracket 300, and the first motor 600 is at least used to drive the carrier 110 to move relative to the mounting bracket 300, so as to adjust the position of the carrier 110 through the first motor 600. The second motor 400 is provided on the mounting bracket 300, and the second motor 400 is at least used to drive the air guiding vane 120 to move relative to the carrier 110, so as to adjust the position of the air guiding vane 120 through the second motor 400, thereby expanding the motion range of the air guiding vane 120.

When it is necessary to guide the air outflow process of the indoor unit 10 through the air guiding structure 20, the first motor 600 can be used to drive the carrier 110 to move relative to the mounting bracket 300, and the second motor 400 can be used to drive the air guiding vane 120 to move relative to the carrier 110. This can expand the motion range of the air guiding vane 120 relative to the mounting bracket 300, achieve the control of the air supply angle of the indoor unit 10, and enable the air guiding structure 20 to adapt to different room layouts and user needs, helping to reduce air supply blind zones, and optimizing air flow distribution.

For example, when it is necessary to guide the air outflow process of the indoor unit 10 through the air guiding structure 20, the first motor 600 can be used to drive the carrier 110 to move relative to the mounting bracket 300, so that at least part of the carrier 110 can extend out from the air outlet, thereby driving some of the air guiding vanes 120 on the carrier 110 to extend out of the air outlet; and the second motor 400 drives the air guiding vanes 120 to move relative to the carrier 110 to further change the rotation angle of the air guiding vanes 120.

By independently driving the carrier 110 and the air guiding vane 120 through the first motor 600 and the second motor 400, the air guiding vane 120 can both move together with the carrier 110 to the outer side of the air outlet and increase the rotation angle of the air guiding vane 120. This increases the angle change of the air outflow direction by the air guiding vane 120, improves the air guiding effect of the air guiding vane 120, and expands the air supply zone of the air handling device.

An embodiment of the present application provides an indoor unit 10, including the air guiding structure 20 and a first heat exchanger, where the air guiding structure 20 is provided on an air outflow side of the first heat exchanger.

In some possible implementations, the indoor unit 10 is provided with an air outlet; the air outlet is provided with an air deflector, and the air deflector is movable relative to the air outlet; the air guiding structure 20 is provided on an inner side of the air deflector.

An embodiment of the present application provides an indoor unit, including a first heat exchanger and the air guiding structure according to any one of the above-mentioned embodiments.

In some possible implementations, the indoor unit is provided with an air outlet; the air outlet is provided with an air deflector, and the air deflector is movable relative to the air outlet; the air guiding structure is provided on the inner side of the air deflector.

The air handling device includes a compressor and a second heat exchanger, and both the first heat exchanger and the second heat exchanger are connected to the compressor.

An embodiment of the present application provides an air handling device, which includes but is not limited to an air conditioning device, a humidifier, a dehumidifier, a ventilation device, a heat recovery ventilation system, an air purifier, a fresh air device, and the like. In an embodiment of the present application, the air handling device is described by taking an air conditioning device as an example. The air conditioning device may include a wall-mounted air conditioner, a floor-standing air conditioner, a central air conditioner, a duct-type air conditioner, and the like.

It should be noted that in some other embodiments, the adjusting assembly 10 may rotate around a base point 13 and may also translate in a direction away from a mounting surface m relative to the mounting surface m. The rotation and translation may be performed simultaneously, or translation first then rotation, or rotation first then translation. In the embodiments of the present application, the order of rotation and translation of the adjusting assembly 10 is not further limited. The embodiments or implementations in the present specification are described in a progressive manner, and each embodiment focuses on the differences from other embodiments. For the same or similar parts between the various embodiments, reference may be made to each other. The above descriptions are only specific implementations of the present application, but the protection scope of the present application is not limited thereto. Any change or replacement that can be easily conceived by those skilled in the art within the technical scope disclosed in the present application shall be covered within the protection scope of the present application. Therefore, the protection scope of the present application shall be subject to the protection scope of the claims.

## Claims

1. An air guiding structure, mounted at an air outlet of an air handling device, wherein the air guiding structure comprises:
an adjusting assembly, which comprises a carrier and air guiding vanes movably connected to the carrier; wherein the carrier extends along a length direction of the air outlet, and the air guiding vanes are sequentially provided along a plate surface of the carrier; and
a driving assembly, which drives the carrier to change its position relative to the air outlet, and the driving assembly drives each air guiding vane to change its position relative to the carrier.

2. The air guiding structure according to claim 1, wherein the driving assembly comprises:
a driving motor, configured to provide a driving force;
a transmission component, drivingly connected between the driving motor and the adjusting assembly;
wherein the transmission component drives the carrier to move, and one of the driving motor and the transmission component drives each air guiding vane to swing.

3. The air guiding structure according to claim 2, wherein the transmission component comprises:
a first transmission portion, drivingly connected to the driving motor;
a second transmission portion, drivingly connected between the first transmission portion and the carrier and driving the carrier to move;
wherein the driving motor drives each air guiding vane to swing.

4. The air guiding structure according to claim 3, wherein the second transmission portion is located on a side of the first transmission portion close to the carrier.

5. The air guiding structure according to claim 2, wherein motion modes of the driving assembly driving the adjusting assembly to move comprise a first motion mode and a second motion mode;
wherein the first motion mode is that the carrier moves and the air guiding vanes swing;
the second motion mode is that the carrier is stationary and the air guiding vanes swing.

6. The air guiding structure according to claim 5, wherein when in the second motion mode, the carrier is located at an initial position or a limit position;
wherein when at the initial position, the carrier is completely accommodated in the air outlet; when at the limit position, at least part of the carrier extends out of the air outlet.

7. The air guiding structure according to claim 2, wherein the driving assembly drives the carrier to swing so as to change an included angle of the carrier relative to the length direction of the air outlet.

8. The air guiding structure according to claim 7, wherein the air guiding structure comprises one adjusting assembly;
wherein the driving assembly is connected to a middle of the adjusting assembly along its length direction, or the driving assembly is connected to an end of the adjusting assembly in the length direction of the adjusting assembly.

9. The air guiding structure according to claim 7, wherein the number of the adjusting assembly is two, and the two adjusting assemblies are provided at an interval along the length direction of the air outlet;
the number of the driving assemblies is two, and the two driving assemblies are respectively connected to the two adjusting assemblies.

10. The air guiding structure according to claim 9, wherein the two driving assemblies are symmetrically provided with respect to a central line between the two adjusting assemblies.

11. The air guiding structure according to claim 10, wherein the two driving assemblies are respectively located at ends of the two adjusting assemblies that are far away from each other.

12. The air guiding structure according to claim 2, wherein the adjusting assembly further comprises a linkage component, all the air guiding vanes are connected to the linkage component, and the driving assembly drives all the air guiding vanes to swing through the linkage component.

13. The air guiding structure according to claim 12, wherein the driving assembly is connected to one of the air guiding vanes, or the driving assembly is connected to the linkage component.

14. The air guiding structure according to claim 12, wherein the linkage component is a connecting rod, the connecting rod extends along an extending direction of the carrier, and the connecting rod is connected to all the air guiding vanes.

15. The air guiding structure according to claim 14, wherein the linkage component is provided in the carrier.

16. The air guiding structure according to claim 2, wherein the air guiding vane is located on a side of the carrier facing outside the air outlet, and the driving assembly is located on a side of the carrier facing away from the air guiding vanes.

17. The air guiding structure according to claim 2, further comprising:
a control component, which is electrically connected to the driving assembly, and which controls an operation of the driving assembly.

18. The air guiding structure according to claim 17, wherein the air guiding structure further comprises at least one second driving assembly, the second driving assembly is connected between two adjacent adjusting assemblies, and the second driving assembly simultaneously drives carriers in the two adjusting assemblies to move.

19. The air guiding structure according to claim 1, wherein the air guiding structure comprises a mounting bracket and a limiting component:
the adjusting assembly is movably provided on the mounting bracket;
when the adjusting assembly is at a first position, the adjusting assembly is located on an inner side of the mounting bracket; when the adjusting assembly is at a second position, at least part of the adjusting assembly extends out of the mounting bracket;
the limiting component is provided on the mounting bracket, and the limiting component limits a movement of the adjusting assembly relative to the mounting bracket along a preset path between the first position and the second position.

20. The air guiding structure according to claim 19, wherein the adjusting assembly is rotatably provided on the mounting bracket;
when the adjusting assembly is at the first position, the limiting component limits the movement of the adjusting assembly, and a length direction of the adjusting assembly is parallel or approximately parallel to a length direction of the mounting bracket;
when the adjusting assembly is at the second position, the limiting component limits the movement of the adjusting assembly, the length direction of the adjusting assembly forms a first included angle with the length direction of the mounting bracket, and at least part of the adjusting assembly extends out of the mounting bracket forward.

21. The air guiding structure according to claim 19, wherein the number of the adjusting assemblies is plural, and the plurality of the adjusting assemblies comprise a first adjusting assembly and a second adjusting assembly;
when the first adjusting assembly and the second adjusting assembly are at the first position, a length direction of the first adjusting assembly and a length direction of the second adjusting assembly are located on a same straight line;
when the first adjusting assembly and the second adjusting assembly are at the second position, ends of the first adjusting assembly and the second adjusting assembly that are close to each other extend out of the mounting bracket forward.

22. The air guiding structure according to claim 21, wherein the first adjusting assembly has a first positioning portion, and the first positioning portion is close to the second adjusting assembly; the second adjusting assembly has a second positioning portion, and the second positioning portion is close to the first adjusting assembly;
in a front-to-rear direction of the mounting bracket, a distance between the first positioning portion and the second positioning portion gradually increases.

23. The air guiding structure according to claim 22, wherein when the first adjusting assembly and the second adjusting assembly are at the first position, front sides of the first positioning portion and the second positioning portion are close to each other;
when the first adjusting assembly and the second adjusting assembly are at the second position, rear sides of the first positioning portion and the second positioning portion are close to each other.

24. The air guiding structure according to claim 23, wherein the number of the air guiding vanes is plural.

25. The air guiding structure according to claim 24, wherein the air guiding vanes are provided on a front side of the carrier.

26. The air guiding structure according to claim 19, wherein when the adjusting assembly moves between the first position and the second position along the preset path, the adjusting assembly moves toward a middle of a front side of the mounting bracket.

27. The air guiding structure according to claim 20, wherein a third position is provided between the first position and the second position;
when the adjusting assembly is at the third position, the limiting component limits the movement of the adjusting assembly, the length direction of the adjusting assembly forms a second included angle with the length direction of the mounting bracket, and the second included angle is smaller than the first included angle.

28. The air guiding structure according to claim 19, wherein the limiting component comprises a second limiting shaft and a second limiting groove that cooperate with each other, one of the second limiting shaft and the second limiting groove is provided on the mounting bracket, and the other of the second limiting shaft and the second limiting groove is provided on the adjusting assembly;
the second limiting groove has a first limiting portion and a second limiting portion, the first limiting portion is close to a rear side of the mounting bracket, and the second limiting portion is close to the front side of the mounting bracket; the second limiting shaft moves between the first limiting portion and the second limiting portion along an extending direction of the second limiting groove;
when the second limiting shaft is located at the first limiting portion, the adjusting assembly is at the first position, and the first limiting portion and the second limiting shaft that cooperate with each other limit the movement of the adjusting assembly;
when the second limiting shaft is located at the second limiting portion, the adjusting assembly is at the second position, and the second limiting portion and the second limiting shaft that cooperate with each other limit the movement of the adjusting assembly.

29. The air guiding structure according to claim 28, wherein the limiting component further comprises a first limiting shaft and a first limiting groove that cooperate with each other, one of the first limiting shaft and the first limiting groove is provided on the mounting bracket, and the other of the first limiting shaft and the first limiting groove is provided on the adjusting assembly;
in an extending direction of the mounting bracket, the second limiting shaft and the second limiting groove are closer to a middle of the mounting bracket than the first limiting shaft and the first limiting groove.

30. The air guiding structure according to claim 29, wherein a first end of the first limiting groove is close to an edge of the mounting bracket, and a second end of the first limiting groove is close to the middle of the mounting bracket;
when the adjusting assembly moves from the first position toward the second position, the first limiting shaft moves toward the second end of the first limiting groove; when the adjusting assembly moves from the second position toward the first position, the first limiting shaft moves toward the first end of the first limiting groove.

31. The air guiding structure according to claim 29, wherein in a front-rear direction of the mounting bracket, the first limiting groove is close to the rear side of the mounting bracket; the first limiting groove extends along a circumferential direction of an output shaft of the driving motor.

32. The air guiding structure according to claim 28, wherein the second limiting groove is provided with a third limiting portion, and in an extending direction of the second limiting groove, the third limiting portion is located between the first limiting portion and the second limiting portion;
when the second limiting shaft is located at the third limiting portion, the adjusting assembly is at the third position, and the third limiting portion and second limiting shaft that cooperate with each other limit the movement of the adjusting assembly.

33. The air guiding structure according to claim 32, wherein in a length direction of the mounting bracket, the third limiting portion is closer to a middle of the mounting bracket than the first limiting portion and the second limiting portion.

34. The air guiding structure according to claim 1, wherein the driving assembly comprises a first motor, which is used to be provided on a housing of an indoor unit; the first motor being at least used to drive the carrier to move relative to the housing of the indoor unit; and
a second motor, which is used to be provided on the housing of the indoor unit; the second motor being at least used to drive the air guiding vanes to rotate relative to the carrier.

35. The air guiding structure according to claim 34, wherein the first motor drives the carrier to rotate relative to the housing of the indoor unit around a preset rotating shaft, and an output shaft of the first motor is provided at an interval from the preset rotating shaft;
the second motor drives the air guiding vanes to rotate relative to the carrier, and an output shaft of the second motor is coaxially provided with the preset rotating shaft.

36. The air guiding structure according to claim 35, wherein the air guiding structure further comprises a first transmission assembly, wherein the first transmission assembly comprises a gear and an arc-shaped rack that cooperate with each other;
the gear is coaxially and fixedly connected to the output shaft of the first motor, the arc-shaped rack is provided on the carrier, and a central axis of a circle corresponding to the arc-shaped rack coincides with the preset rotating shaft.

37. The air guiding structure according to claim 36, wherein the carrier is provided with a mounting groove, and the arc-shaped rack is fixedly provided in the mounting groove;
the gear is movably provided in the mounting groove, and the gear meshes with the arc-shaped gear.

38. The air guiding structure according to claim 34, wherein the carrier is provided with a guiding component, and the guiding component guides the carrier to rotate relative to the housing of the indoor unit around the preset rotating shaft.

39. The air guiding structure according to claim 38, wherein the air guiding structure further comprises a first transmission assembly;
the guiding component moves relative to a guiding groove around the preset rotating shaft, and the guiding component is located on an outer side of the first transmission assembly.

40. The air guiding structure according to claim 34, wherein the air guiding structure comprises a mounting bracket, and the mounting bracket is mounted on the housing of an indoor unit, and the carrier is movably provided on the mounting bracket.

41. The air guiding structure according to claim 40, wherein the carrier comprises an upper housing and a lower housing that are connected to each other, and the upper housing and the lower housing enclose an accommodating cavity;
the lower housing is rotatably provided on the mounting bracket, and the lower housing is connected to an output shaft of the first motor; the air guiding vanes are provided on the upper housing.

42. The air guiding structure according to claim 41, wherein the air guiding structure further comprises a second transmission assembly, and the second transmission assembly is located in the accommodating cavity;
an input end of the second transmission assembly is connected to the second motor, and an output end of the second transmission assembly is connected to the air guiding vanes.

43. The air guiding structure according to claim 42, wherein the number of the air guiding vanes is plural, and the plurality of air guiding vanes are sequentially provided at an interval along a first direction;
the second transmission assembly comprises a transmission connecting rod, an input connecting rod and a plurality of output connecting rods;
a first end of the input connecting rod is fixedly connected to an output end of the second motor, a second end of the input connecting rod is rotatably connected to the transmission connecting rod, and the transmission connecting rod extends along the first direction;
the output connecting rod is provided in parallel with the input connecting rod, a first end of the output connecting rod is rotatably connected to the transmission connecting rod, and a second end of the output connecting rod is fixedly connected to a corresponding air guiding vane.

44. The air guiding structure according to claim 40, wherein the first motor is fixedly provided on a side of the mounting bracket away from the carrier, an output end of the first motor passes through and is provided on the mounting bracket, and the output end of the first motor is connected to the carrier;
the second motor is movably provided on the side of the mounting bracket away from the carrier, the mounting bracket is provided with an escape opening, and the second motor is connected to the carrier through the escape opening.

45. The air guiding structure according to claim 1, wherein the air guiding vane comprises a vane body, a plurality of air outlet holes are arranged on the vane body, and the air outlet holes penetrate through two side surfaces of the vane body in a thickness direction of the vane body;
wherein the vane body comprises a first air guiding side and a second air guiding side that are oppositely provided; when the air guiding vane is in an open state, the first air guiding side is located on an outer side of the air outlet, and the second air guiding side is located on an inner side of the air outlet.

46. The air guiding structure according to claim 45, wherein from a first surface of the vane body to a second surface of the vane body, the air outlet holes extend obliquely toward the first air guiding side;
wherein the first surface and the second surface are two side surfaces of the vane body in the thickness direction of the vane body; when the air guiding vane is inclined toward the same side of the air outlet, the first surface faces toward the inner side of the air outlet, and the second surface faces toward the outer side of the air outlet.

47. The air guiding structure according to claim 46, wherein an included angle between an extending direction of the air outlet holes and a datum plane is 30°-60°;
wherein the datum plane is an orthographic projection plane of the vane body, and the datum plane passes through a central axis of the vane body.

48. The air guiding structure according to claim 47, wherein the included angle between the extending direction of the air outlet holes and the datum plane is 40°-50°.

49. The air guiding structure according to claim 48, wherein the included angle between the extending direction of the air outlet holes and the datum plane is 45°.

50. The air guiding structure according to claim 45, wherein a cross-sectional shape of the air outlet holes comprises at least one of a circle, an ellipse, or a regular polygon.

51. The air guiding structure according to claim 50, wherein when the air outlet holes are a circular hole, a diameter of the air outlet holes is 4mm-9mm.

52. The air guiding structure according to claim 45, wherein the air outlet holes are uniformly distributed on a surface of the vane body.

53. The air guiding structure according to claim 1, wherein the air guiding vanes are sequentially provided along a length direction of the carrier.

54. The adjusting assembly according to claim 53, wherein when the air guiding vanes are perpendicular to a plane where the air outlet is located, extension lines of first air guiding sides of the air guiding vanes all extend toward an end of the same side of the air outlet; and
along a direction close to the end of the air outlet, an included angle between the extension lines of the first air guiding sides of the air guiding vanes and a datum plane gradually increases.

55. An indoor unit, comprising the air guiding structure according to any one of claims 1-54, and a first heat exchanger, wherein the air guiding structure is provided on an air outflow side of the first heat exchanger.

56. The indoor unit according to claim 55, wherein the indoor unit is provided with an air outlet;
the air outlet is provided with an air deflector, and the air deflector is movable relative to the air outlet; the air guiding structure is provided on an inner side of the air deflector.

57. An air handling device, comprising the indoor unit according to claim 56, as well as a compressor and a second heat exchanger, wherein both the first heat exchanger and the second heat exchanger are connected to the compressor.
